# EUROPEAN PATENT APPLICATION

(11) **EP 4 629 174 A1**
(43) Date of publication of application: **08.10.2025**
(21) Application number: 24305540.7
(22) Date of filing: 05.04.2024
(51) Int. Cl.: G06T 9/00, H04N 19/597, H04N 19/70

(54) **POLYGONS ENCODING IN SCENE DESCRIPTIONS**

(71) Applicant: InterDigital CE Patent Holdings, SAS, 75017 Paris (FR)
(72) Inventor: GOSSELIN, Philippe Henri, 35235 THORIGNE-FOUILLARD (FR); LE CLERC, Francois, 35590 L'HERMITAGE (FR); COVA REGATEIRO, João Pedro, 35220 CHATEAUBOURG (FR); AVRIL, Quentin, 35830 BETTON (FR)
(74) Representative: Vossius & Partner Patentanwälte Rechtsanwälte mbB

(57) **Abstract**

Some embodiments of a method may include obtaining information corresponding to a mesh associated with an object in a 3D scene representation; parsing accessor information, wherein the information corresponding to the object comprises the accessor information; storing a first portion of the accessor information in a first data structure; parsing the accessor information for MPEG_accessor_tuples extension properties; storing a second portion of the accessor information in a second data structure, wherein the second portion of accessor information corresponds to the MPEG_accessor_tuples extension properties; building a tuples data structure using the first and second data structures; and outputting the tuples data structure.

## Description

### BACKGROUND

The current MPEG-I Scene Description (SD) format allows the encoding of 3D meshes in the "meshes" list of the root of the glTF file. Each mesh is made of one or more 3D primitives encoded in the "primitives" property of the "meshes" root list. See *qITF 2.0 Specification,* THE KHRONOS 3D FORMATS WORKING GROUP, Version 2.0, *available at* registry<dot>khronos<dot>org/gITF/specs/2<dot>0/gITF-2<dot>0<dot>pdf.

### SUMMARY

An example method in accordance with some embodiments may include: obtaining information corresponding to a mesh associated with an object in a 3D scene representation; parsing accessor information, wherein the information corresponding to the object comprises the accessor information; storing a first portion of the accessor information in a first data structure; parsing the accessor information for MPEG_accessor tuples extension properties; storing a second portion of the accessor information in a second data structure, wherein the second portion of accessor information corresponds to the MPEG_accessor_tuples extension properties; building a tuples data structure using the first and second data structures; and outputting the tuples data structure.

Some embodiments of the example method further include determining if the accessor information comprises the MPEG_accessor_tuples extension properties.

Some embodiments of the example method further include verifying that a datatype of the first data structure is an unsigned integer.

Some embodiments of the example method further include: parsing primitives information, wherein the information corresponding to the object comprises the primitives information; storing a portion of the primitive information in a primitives data structure; parsing MPEG_primitive topologies extension properties for topologies data, wherein the information corresponding to the object comprises the MPEG_primitive topologies extension properties; and adding the topologies data to the primitives data structure, wherein the portion of topologies information corresponds to the MPEG_primitive topologies extension properties.

Some embodiments of the example method further include determining if the accessor information comprises the MPEG_primitive topologies extension properties.

For some embodiments of the example method, parsing MPEG_primitive topologies extension properties for topologies data comprises: parsing the MPEG_primitive_topologies extension properties of the primitive information; using a first portion of the MPEG_primitive topologies extension properties to obtain the first data structure; using a second portion of the MPEG_primitive_topologies extension properties to obtain the second data structure; building the topologies data using the first and second data structures; and outputting the topologies data.

For some embodiments of the example method, the first portion of the MPEG_primitive topologies extension properties is an edges property, the second portion of the MPEG_primitive topologies extension properties is an indices property, and the topologies data comprises tuples data.

Some embodiments of the example method further include: parsing primitives information, wherein the information corresponding to the object comprises the primitives information; storing a portion of the primitive information in a primitives data structure; parsing MPEG_mesh_topologies extension properties for topologies data, wherein the information corresponding to the object comprises the MPEG_mesh topologies extension properties; and adding the topologies data to the primitives data structure, wherein the portion of topologies information corresponds to the MPEG_mesh_topologies extension properties.

Some embodiments of the example method further include determining if the accessor information comprises the MPEG_mesh_topologies extension properties.

For some embodiments of the example method, parsing MPEG_mesh topologies extension properties for topologies data comprises: parsing the MPEG_mesh topologies extension properties; using a first portion of the MPEG_mesh_topologies extension properties to obtain the first data structure; using a second portion of the MPEG_mesh_topologies extension properties to obtain the second data structure; building the topologies data using the first and second data structures; and outputting the topologies data.

For some embodiments of the example method, the first portion of the MPEG_mesh_topologies extension properties is an edges property, the second portion of the MPEG_mesh_topologies extension properties is an indices property, and the topologies data comprises tuples data.

Some embodiments of the example method further include: parsing the MPEG_mesh_topologies extension properties for positions data; and using the positions data to obtain data from the accessor information.

For some embodiments of the example method, the mesh associated with the object comprises one or more polygons with at least four edges.

For some embodiments of the example method, the information corresponding to the mesh complies with a glTF format.

An example apparatus in accordance with some embodiments may include: a processor; and a memory storing instructions operative, when executed by the processor, to cause the apparatus to perform any one of the methods listed above.

### BRIEF DESCRIPTION OF THE DRAWINGS

FIG. 1A is a system diagram illustrating an example set of interfaces for a system according to some embodiments.
FIG. 1B is a system diagram illustrating an example set of interfaces for a scene description (stored as an item in gITF.json), three video tracks, an audio track, and a JSON patch update track in an ISOBMFF file according to some embodiments.
FIG. 1C is a system diagram illustrating an example set of interfaces for an MPEG-I node hierarchy supporting elements of scene interactivity according to some embodiments.
FIG. 1D is a schematic plan view illustrating example relationships of extended reality scene description objects according to some embodiments.
FIG. 2 is a schematic illustration showing an example mesh square according to some embodiments.
FIG. 3 is a schematic illustration showing an example cube to be encoded according to some embodiments.
FIG. 4 is a flowchart illustrating an example MPEG_controllers parsing process according to some embodiments.
FIG. 5 is a flowchart illustrating an example MPEG_accessor_tuples parsing process according to some embodiments.
FIG. 6 is a flowchart illustrating an example MPEG_primitive topologies parsing process according to some embodiments.
FIG. 7 is a flowchart illustrating an example MPEG_primitive topologies parsing process according to some embodiments.
FIG. 8 is a flowchart illustrating an example MPEG_primitive topologies parsing process according to some embodiments.
FIG. 9 is a flowchart illustrating an example MPEG_mesh_topologies parsing process according to some embodiments.
FIG. 10 is a flowchart illustrating an example MPEG_mesh topologies parsing process according to some embodiments.
FIG. 11 is a flowchart illustrating an example process for MPEG_mesh topologies according to some embodiments.
FIG. 12 is a flowchart illustrating an example process for building a tuple data structure according to some embodiments.

The entities, connections, arrangements, and the like that are depicted in-and described in connection with-the various figures are presented by way of example and not by way of limitation. As such, any and all statements or other indications as to what a particular figure "depicts," what a particular element or entity in a particular figure "is" or "has," and any and all similar statements-that may in isolation and out of context be read as absolute and therefore limiting-may only properly be read as being constructively preceded by a clause such as "In at least one embodiment, ...." For brevity and clarity of presentation, this implied leading clause is not repeated *ad nauseum* in the detailed description.

### DETAILED DESCRIPTION

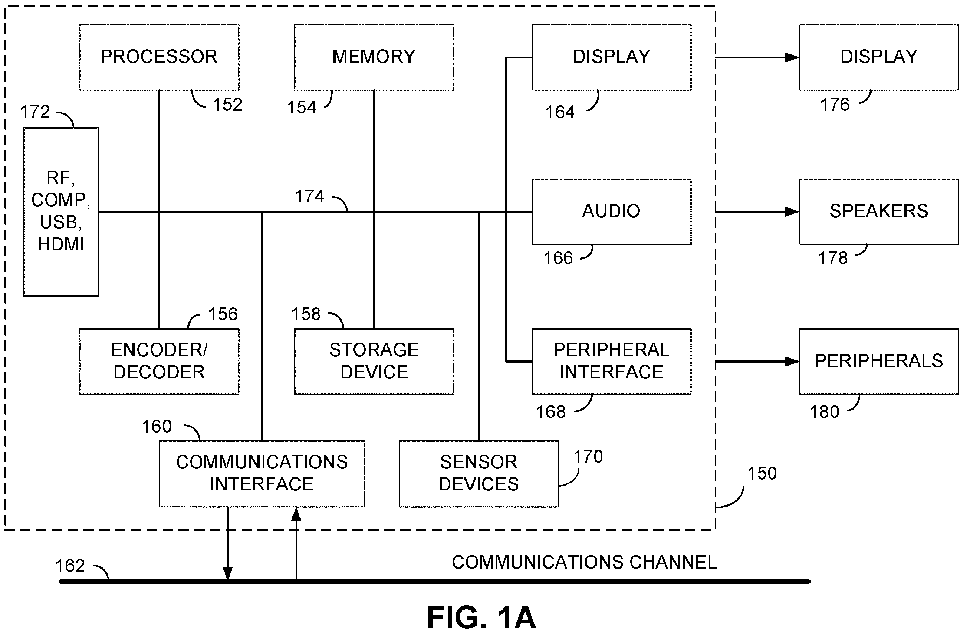

FIG. 1A is a system diagram illustrating an example set of interfaces for a system according to some embodiments. An extended reality display device, together with its control electronics, may be implemented using a system such as the system of FIG. 1A. System 150 can be embodied as a device including the various components described below and is configured to perform one or more of the aspects described in this document. Examples of such devices, include, but are not limited to, various electronic devices such as personal computers, laptop computers, smartphones, tablet computers, digital multimedia set top boxes, digital television receivers, personal video recording systems, connected home appliances, and servers. Elements of system 150, singly or in combination, can be embodied in a single integrated circuit (IC), multiple ICs, and/or discrete components. For example, in at least one embodiment, the processing and encoder/decoder elements of system 150 are distributed across multiple ICs and/or discrete components. In various embodiments, the system 150 is communicatively coupled to one or more other systems, or other electronic devices, via, for example, a communications bus or through dedicated input and/or output ports. In various embodiments, the system 150 is configured to implement one or more of the aspects described in this document.

The system 150 includes at least one processor 152 configured to execute instructions loaded therein for implementing, for example, the various aspects described in this document. Processor 152 may include embedded memory, input output interface, and various other circuitries as known in the art. The system 150 includes at least one memory 154 (e.g., a volatile memory device, and/or a non-volatile memory device). System 150 may include a storage device 158, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash, magnetic disk drive, and/or optical disk drive. The storage device 158 can include an internal storage device, an attached storage device (including detachable and non-detachable storage devices), and/or a network accessible storage device, as non-limiting examples.

System 150 includes an encoder/decoder module 156 configured, for example, to process data to provide an encoded video or decoded video, and the encoder/decoder module 156 can include its own processor and memory. The encoder/decoder module 156 represents module(s) that can be included in a device to perform the encoding and/or decoding functions. As is known, a device can include one or both of the encoding and decoding modules. Additionally, encoder/decoder module 156 can be implemented as a separate element of system 150 or can be incorporated within processor 152 as a combination of hardware and software as known to those skilled in the art.

Program code to be loaded onto processor 152 or encoder/decoder 156 to perform the various aspects described in this document can be stored in storage device 158 and subsequently loaded onto memory 154 for execution by processor 152. In accordance with various embodiments, one or more of processor 152, memory 154, storage device 158, and encoder/decoder module 156 can store one or more of various items during the performance of the processes described in this document. Such stored items can include, but are not limited to, the input video, the decoded video or portions of the decoded video, the bitstream, matrices, variables, and intermediate or final results from the processing of equations, formulas, operations, and operational logic.

In some embodiments, memory inside of the processor 152 and/or the encoder/decoder module 156 is used to store instructions and to provide working memory for processing that is needed during encoding or decoding. In other embodiments, however, a memory external to the processing device (for example, the processing device can be either the processor 152 or the encoder/decoder module 152) is used for one or more of these functions. The external memory can be the memory 154 and/or the storage device 158, for example, a dynamic volatile memory and/or a non-volatile flash memory. In several embodiments, an external non-volatile flash memory is used to store the operating system of, for example, a television. In at least one embodiment, a fast external dynamic volatile memory such as a RAM is used as working memory for video coding and decoding operations, such as for MPEG-2 (MPEG refers to the Moving Picture Experts Group, MPEG-2 is also referred to as ISO/IEC 13818, and 13818-1 is also known as H.222, and 13818-2 is also known as H.262), HEVC (HEVC refers to High Efficiency Video Coding, also known as H.265 and MPEG-H Part 2), or VVC (Versatile Video Coding, a new standard being developed by JVET, the Joint Video Experts Team).

The input to the elements of system 150 can be provided through various input devices as indicated in block 172. Such input devices include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High Definition Multimedia Interface (HDMI) input terminal. Other examples, not shown in FIG. 1A, include composite video.

In various embodiments, the input devices of block 172 have associated respective input processing elements as known in the art. For example, the RF portion can be associated with elements suitable for (i) selecting a desired frequency (also referred to as selecting a signal, or band-limiting a signal to a band of frequencies), (ii) downconverting the selected signal, (iii) band-limiting again to a narrower band of frequencies to select (for example) a signal frequency band which can be referred to as a channel in certain embodiments, (iv) demodulating the downconverted and band-limited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, downconverting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, downconverting, and filtering again to a desired frequency band. Various embodiments rearrange the order of the above-described (and other) elements, remove some of these elements, and/or add other elements performing similar or different functions. Adding elements can include inserting elements in between existing elements, such as, for example, inserting amplifiers and an analog-to-digital converter. In various embodiments, the RF portion includes an antenna.

Additionally, the USB and/or HDMI terminals can include respective interface processors for connecting system 150 to other electronic devices across USB and/or HDMI connections. It is to be understood that various aspects of input processing, for example, Reed-Solomon error correction, can be implemented, for example, within a separate input processing IC or within processor 152 as necessary. Similarly, aspects of USB or HDMI interface processing can be implemented within separate interface ICs or within processor 152 as necessary. The demodulated, error corrected, and demultiplexed stream is provided to various processing elements, including, for example, processor 152, and encoder/decoder 156 operating in combination with the memory and storage elements to process the datastream as necessary for presentation on an output device.

Various elements of system 150 can be provided within an integrated housing, Within the integrated housing, the various elements can be interconnected and transmit data therebetween using suitable connection arrangement 174, for example, an internal bus as known in the art, including the Inter-IC (I2C) bus, wiring, and printed circuit boards.

The system 150 includes communication interface 160 that enables communication with other devices via communication channel 162. The communication interface 160 can include, but is not limited to, a transceiver configured to transmit and to receive data over communication channel 162. The communication interface 160 can include, but is not limited to, a modem or network card and the communication channel 162 can be implemented, for example, within a wired and/or a wireless medium.

Data is streamed, or otherwise provided, to the system 150, in various embodiments, using a wireless network such as a Wi-Fi network, for example IEEE 802.11 (IEEE refers to the Institute of Electrical and Electronics Engineers). The Wi-Fi signal of these embodiments is received over the communications channel 162 and the communications interface 160 which are adapted for Wi-Fi communications. The communications channel 162 of these embodiments is typically connected to an access point or router that provides access to external networks including the Internet for allowing streaming applications and other over-the-top communications. Other embodiments provide streamed data to the system 150 using a set-top box that delivers the data over the HDMI connection of the input block 172. Still other embodiments provide streamed data to the system 150 using the RF connection of the input block 172. As indicated above, various embodiments provide data in a non-streaming manner. Additionally, various embodiments use wireless networks other than Wi-Fi, for example a cellular network or a Bluetooth network.

The system 150 can provide an output signal to various output devices, including a display 176, speakers 178, and other peripheral devices 180. The display 176 of various embodiments includes one or more of, for example, a touchscreen display, an organic light-emitting diode (OLED) display, a curved display, and/or a foldable display. The display 176 can be for a television, a tablet, a laptop, a cell phone (mobile phone), or other device. The display 176 can also be integrated with other components (for example, as in a smart phone), or separate (for example, an external monitor for a laptop). The other peripheral devices 180 include, in various examples of embodiments, one or more of a stand-alone digital video disc (or digital versatile disc) (DVR, for both terms), a disk player, a stereo system, and/or a lighting system. Various embodiments use one or more peripheral devices 180 that provide a function based on the output of the system 150. For example, a disk player performs the function of playing the output of the system 150.

In various embodiments, control signals are communicated between the system 150 and the display 176, speakers 178, or other peripheral devices 180 using signaling such as AV.Link, Consumer Electronics Control (CEC), or other communications protocols that enable device-to-device control with or without user intervention. The output devices can be communicatively coupled to system 150 via dedicated connections through respective interfaces 164, 166, and 168. Alternatively, the output devices can be connected to system 150 using the communications channel 162 via the communications interface 160. The display 176 and speakers 178 can be integrated in a single unit with the other components of system 150 in an electronic device such as, for example, a television. In various embodiments, the display interface 164 includes a display driver, such as, for example, a timing controller (T Con) chip.

The display 176 and speaker 178 can alternatively be separate from one or more of the other components, for example, if the RF portion of input 172 is part of a separate set-top box. In various embodiments in which the display 176 and speakers 178 are external components, the output signal can be provided via dedicated output connections, including, for example, HDMI ports, USB ports, or COMP outputs.

The system 150 may include one or more sensor devices 168. Examples of sensor devices that may be used include one or more GPS sensors, gyroscopic sensors, accelerometers, light sensors, cameras, depth cameras, microphones, and/or magnetometers. Such sensors may be used to determine information such as user's position and orientation. Where the system 150 is used as the control module for an extended reality display (such as control modules 124, 132), the user's position and orientation may be used in determining how to render image data such that the user perceives the correct portion of a virtual object or virtual scene from the correct point of view. In the case of head-mounted display devices, the position and orientation of the device itself may be used to determine the position and orientation of the user for the purpose of rendering virtual content. In the case of other display devices, such as a phone, a tablet, a computer monitor, or a television, other inputs may be used to determine the position and orientation of the user for the purpose of rendering content. For example, a user may select and/or adjust a desired viewpoint and/or viewing direction with the use of a touch screen, keypad or keyboard, trackball, joystick, or other input. Where the display device has sensors such as accelerometers and/or gyroscopes, the viewpoint and orientation used for the purpose of rendering content may be selected and/or adjusted based on motion of the display device.

The embodiments can be carried out by computer software implemented by the processor 152 or by hardware, or by a combination of hardware and software. As a non-limiting example, the embodiments can be implemented by one or more integrated circuits. The memory 154 can be of any type appropriate to the technical environment and can be implemented using any appropriate data storage technology, such as optical memory devices, magnetic memory devices, semiconductor-based memory devices, fixed memory, and removable memory, as non-limiting examples. The processor 152 can be of any type appropriate to the technical environment, and can encompass one or more of microprocessors, general purpose computers, special purpose computers, and processors based on a multi-core architecture, as non-limiting examples.

### Scene Description Framework for XR

The present principles generally relate to the domain of rendering of extended reality scene description and extended reality rendering. The present document is also understood in the context of the formatting and the playing of extended reality applications when rendered on end-user devices such as mobile devices or Head-Mounted Displays (HMD).

In XR applications, a scene description is used to combine explicit and easy-to-parse description of a scene structure and some binary representations of media content.

In time-based media streaming, the scene description itself can be time-evolving to provide the relevant virtual content for each sequence of a media stream. For instance, for advertising purpose, a virtual bottle can be displayed during a video sequence where people are drinking.

This kind of behavior can be achieved by relying on the framework defined in the Scene Description for MPEG media document, Information technology - Coded representation of immersive media - Part 14: Scene Description for MPEG media, ISO/IEC DIS 23090-14 :2021 (E). A scene update mechanism based on the JSON Patch protocol as defined in IETF RFC 6902 may be used to synchronize virtual content to MPEG media streams.

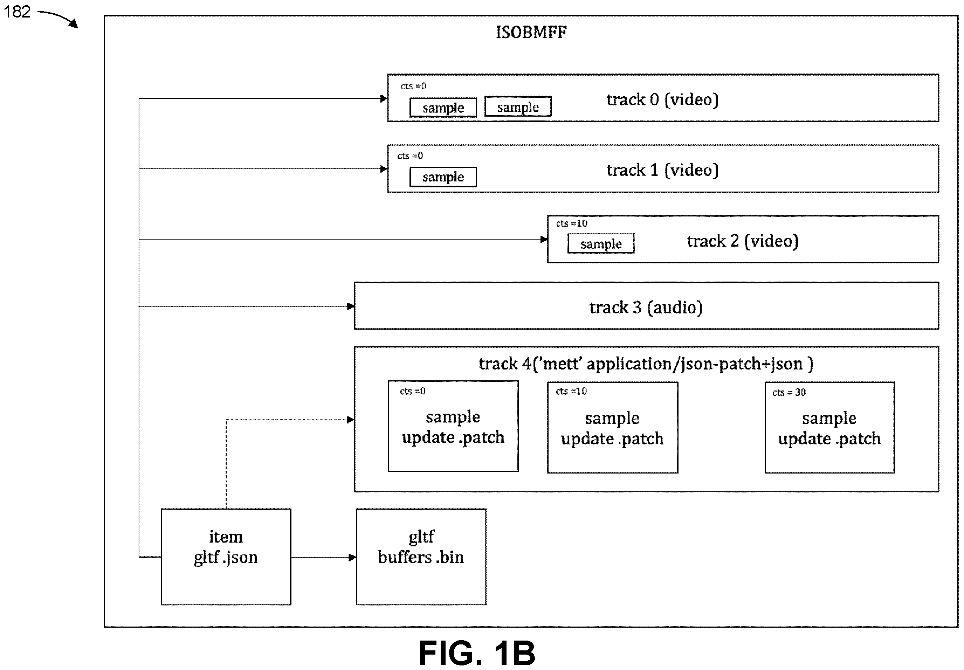

FIG. 1B is a system diagram illustrating an example set of interfaces for a scene description (stored as an item in gITF.json), three video tracks, an audio track, and a JSON patch update track in an ISOBMFF file 182 according to some embodiments.

### Runtime Interactivity

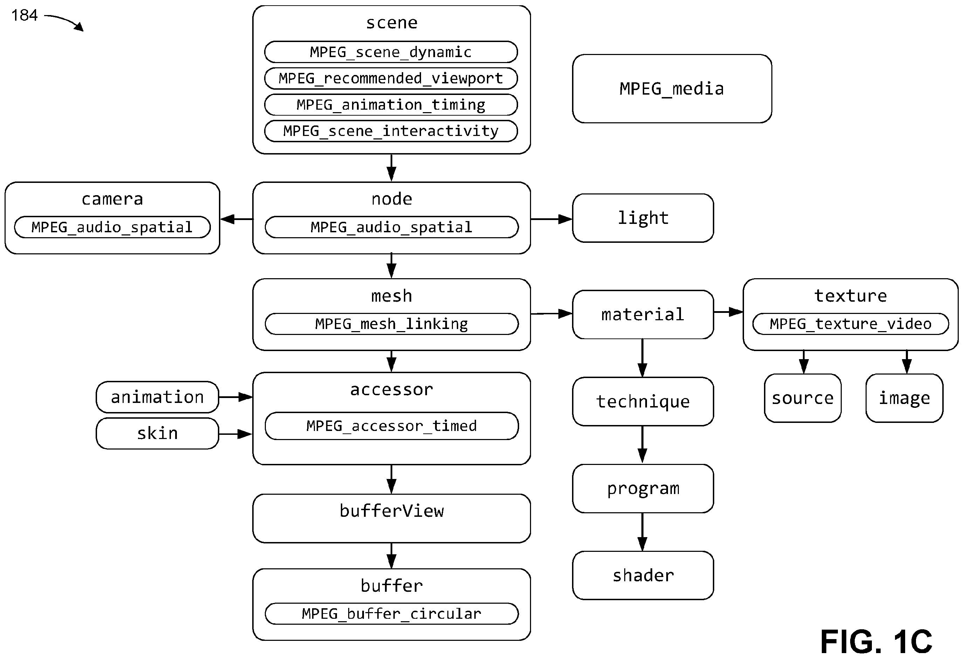

FIG. 1C is a system diagram illustrating an example set of interfaces for an MPEG-I node hierarchy 184 supporting elements of scene interactivity according to some embodiments.

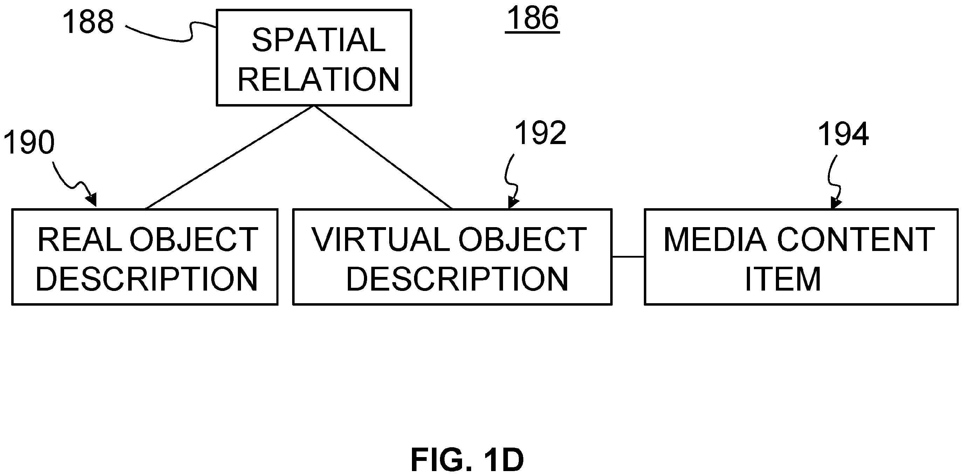

FIG. 1D is a schematic plan view illustrating example relationships of extended reality scene description objects according to some embodiments. In this example, the scene graph 186 includes a description of a real object 190, for example 'plane horizontal surface' (that can be a table or the floor or a plate) and a description of a virtual object 192, for example an animation of a walking character. Scene graph node 192 is associated with a media content item 194 that is the encoding of data used to render and display the walking character (for example as a textured animated 3D mesh). Scene graph 186 also includes a node 188 that is a description of the spatial relation between the real object described in node 190 and the virtual object described in node 192. In this example, node 188 describes a spatial relation to make the character walk on the plane surface. When the XR application is started, media content item 194 is loaded, rendered and buffered to be displayed when triggered. When a plane surface is detected in the real environment by sensors (or a camera for some embodiments), the application displays the buffered media content item as described in node 188. The timing is managed by the application according to features detected in the real environment and to the timing of the animation. A node of a scene graph may also include no description and only play a role of a parent for child nodes.

XR applications are various and may apply to different context and real or virtual environments. For example, in an industrial XR application, a virtual 3D content item (e.g. a piece A of an engine) is displayed when a reference object (piece B of an engine) is detected in the real environment by a camera rigged on a head mounted display device. The 3D content item is positioned in the real-world with a position and a scale defined relatively to the detected reference object.

For example, in an XR application for interior design, a 3D model of a furniture is displayed when a given image from the catalog is detected in the input camera view. The 3D content is positioned in the real-world with a position and scale which is defined relatively to the detected reference image. In another application, some audio file might start playing when the user enters an area which is close to a church (being real or virtually rendered in the extended real environment). In another example, an ad jingle file may be played when the user sees a can of a given soda in the real environment. In an outdoor gaming application, various virtual characters may appear, depending on the semantics of the scenery which is observed by the user. For example, birds characters are suitable for trees, so if the sensors of the XR device detect real objects described by a semantic label 'tree', birds can be added flying around the trees. In a companion application implemented by smart glasses, a car noise may be launched in the user's headset when a car is detected within the field of view of the user camera, in order to warn him of the potential danger; Furthermore, the sound may be spatialized in order to make it arrive from the direction where the car was detected.

An XR application may also augment a video content rather than a real environment. The video is displayed on a rendering device and virtual objects described in the node tree are overlaid when timed events are detected in the video. In such a context, the node tree includes only virtual objects descriptions.

Example embodiments are described with reference to the scope of the MPEG-I Scene Description framework using the Khronos glTF extension mechanism, which supports additional scene description features, such as a node tree. However, the principles described herein are not limited to a particular scene description framework.

In an example embodiment, the glTF scene description is extended to support interactivity. The interactivity extension applies at the glTF scene level and is called MPEG_scene_interactivity. See the document ISO/IEC 23090-14, *CDAM 2: Support for Haptics, Augmented Reality, Avatars, Interactivity, MPEG-I Audio, and Lighting,* ISO/IEC JTC 1/SC 29/WG 03 N00797 ("*MPEG Extension*")*.*

Extended reality (XR) is a technology enabling interactive experiences where the real-world environment and/or a video content is enhanced by virtual content, which can be defined across multiple sensory modalities, including visual, auditory, haptic, etc. During runtime of the application, the virtual content (3D content or audio/video file for example) is rendered in real-time in a way which is consistent with the user context (environment, point of view, device, etc.). Scene graphs (such as the one proposed by Khronos / glTF and its extensions defined in MPEG Scene Description format or Apple / USDZ for instance) are a possible way to represent the content to be rendered. They combine a declarative description of the scene structure linking real-environment objects and virtual objects on one hand, and binary representations of the virtual content on the other hand.

This application relates to mesh encoding for 3D scene representations. Meshes made of faces with any edge count (e.g., polygons) are encoded. These encodings make no assumption on the shape of the polygons.

The current MPEG-I Scene Description (SD) format allows the encoding of 3D meshes in the "meshes" list of the root of the glTF file. Each mesh is made of one or more 3D primitives encoded in the "primitives" property of the "meshes" root list. Without an extension, these primitives may be made of only triangles, e.g., faces with three edges. See *qITF 2.0 Specification*, THE KHRONOS 3D FORMATS WORKING GROUP, Version 2.0, *available at* registry<dot>khronos<dot>org/gITF/specs/2<dot>0/gITF-2<dot>0<dot>pdf.

Extensions are proposed to enable the encoding of quads in gITF, like the "ULTRA triangle_quads" extension (ULTRA triangle_quads, UltraEngine, available at: ultraengine<dot>com/community/blogs/entry/2818-ultra-engine-gltf-extensions/). This extension does not explicitly encode the quads but converts them into triangles and orders the triangle indices in such a way that the original quads may be retrieved. Each quad is split into two triangles, and triangles of the same quad are encoded one after another. The first and second triangles belong to the first quad. The third and fourth belong to the second quad, and so on. This extension is limited to quads and cannot encode polygons of any size. This extension cannot mix triangles and quads but enforces the order of triangle indices.

Discussion about polygons encoding is conducted by the glTF community. See, for example, Discussion About glTF Polygon Encoding, GitHub, available at: github<dot>com/KhronosGroup/glTF/issues/1687. The emphasis is on the need for quads encoding and, more generally, polygons encoding. An extension has been proposed, which is here: *FB_ngon_encoding Proposal*, GITHUB, *available at:* github<dot>com /zellski/gITF/tree/spec/fb-ngon-encoding/extensions/2.0/Vendor/FB_ngon_encoding. This extension, like the previous one, does not add extra data, but orders the triangle indices in such way that one may always retrieve the original polygons, assuming that the polygons respect a set of constraints. An algorithm has been proposed, which is here: *FB_ngon_encoding Differences with gITF 2.0 Standard,* GITHUB, *available at:* github<dot>com /KhronosGroup/gITF/pull/1620/commits/c35ba7fe5c9f49064532f693e46690f8669a0f9d ("*FB_ngon_encoding Differences*"), and which is based on a Catmull-Clark subdivision surface. A Catmull-Clark subdivision surface is described here: Catmull-Clark Subdivision Surface, WIKIPEDIA, *available at:* en<dot>wikipedia<dot>org/wiki/Catmull%E2%80%93Clark_subdivision_surface. This extension may encode polygons of any size and may mix polygons of different sizes. However, it is not possible to use the extension on any mesh according to *FB_ngon_encoding Differences*, and, like the previous proposal, this proposal enforces the order of triangle indices.

As understood, all the current extensions can encode only a single topology of a glTF primitive, which must lead to the same 3D mesh. If additional topologies of the same object (like a version with quads or with less faces) are needed, new glTF meshes and nodes have to be created, and the application must know beforehand what to do with these meshes. See *FB_ngon_encoding Differences.*

One or more extra topologies may be encoded in a glTF with metadata (description and purpose) for some embodiments. The aim of these extra topologies is not to replace the default one with triangles as usually encoded in the glTF (e.g., the implicit vertex index list or the one referenced by the "indices" property of a gITF mesh primitive). The idea is to add different topologies, knowing that each topology serves a specific purpose (e.g., a quad version and/or a decimated for collisions version, among others). For some embodiments (Cases 1 and 2), the glTF vertex coordinates (e.g., the ones referenced by the "POSITION" value of the "attributes" property of a gITF mesh primitive) may be used. For some embodiments, (Cases 3 and 4), new vertex coordinates are defined. In some embodiments of Cases 1-4, new lists of faces are defined using lists of tuples of vertex indices. The vertex indices are relative to the list of vertex coordinates, e.g. vertex index 0 references the first vertex coordinate, vertex index 1 references the second vertex coordinate, and so on.

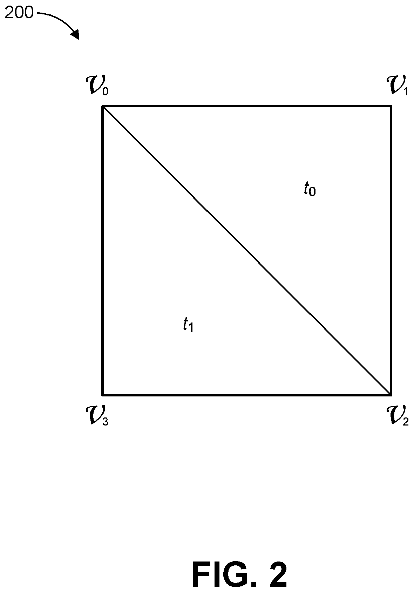

FIG. 2 is a schematic illustration showing an example mesh square according to some embodiments. FIG. 2 shows a mesh 200 of a single square made of two triangles: This mesh has four vertices: *v*₀*, v*_{1,} *v*₂, *v*₃. Each vertex may be referenced by its index: *v*₀ has index 0, *v*₁ has index 1, *v*₂ has index 2 and *v*₃ has index 3.

The default encoding of this mesh in a glTF is in a glTF mesh primitive with a "POSITION" in the "attributes" property that references an accessor with the vertex coordinates (the actual value of these coordinates does not matter for our purpose). An "indices" property also may be defined in the gltf mesh primitive that references an accessor with vertex indices. For instance, the "indices" property may be "0, 1, 2, 2, 3, 0". These indices define two triangles: a triangle *t*₀ with vertex indices (0, 1, 2) and a triangle *t*₁ with vertex indices (2, 3, 0). This default topology is used for rendering.

Another topology based on quads, for instance, may be defined. In this case, the square may be defined by a single quad with vertex indices (0, 1, 2, 3). This additional topology may be used to serve a specific purpose, like editing, collision handling, or even rendering if the renderer may benefit from this additional topology. The aim of this document is to add the encoding of this new topology alongside its purpose, so that an application may use this topology without extra knowledge.

### Tuples

The encoding of new topologies is based on a list of tuples. Each tuple represents one face of a mesh, and each tuple contains the vertex indices of the face. Each face may be a polygon of three or more edges. For example, a triangle-based representation of the square in FIG. 2 as a list of tuples may be a list of two tuples of three vertex indices: [(0, 1, 2), (2, 3, 0)]. A quad-based representation of the square in FIG. 2 as a list of tuples may be a list of one tuple of four vertex indices: [(0, 1, 2, 3)]. A list of tuples does not need to always have tuples of the same size. A list of tuples may be defined for tuples of different sizes that correspond to a topology made of faces/polygons of different sizes. A list of tuples does not need to use all the vertex indices for some embodiments. Some topologies may be a decimated version of the mesh.

Some (or maybe all) embodiments are based on the encoding of a list of tuples of vertex indices. Each tuple corresponds to a face in the mesh and defines a polygon made of three or more edges. Each list of tuples defines a specific mesh topology.

A list of tuples encoding is based on two lists of unsigned integers: an edges list and an indices list. The edges list indicates tuples sizes. The length of this list is always the number of tuples. The indices list is a concatenation of all vertex indices of all tuples. The length of this list is the sum of all tuple sizes.

For example, consider a list of 3 tuples: (3, 7, 23), (1, 2), (12, 6, 5, 18). The list of 3 tuples may be transformed into lists of edges and indices. The edges list is: 3, 2, 4, and the indices list is: 3, 7, 23, 1, 2, 12, 6, 5, 18.

All the data provided in each of Cases 1-4 described below is not required to render the scenes in the glTF file. They provide metadata that may enable new features, like editing or handling collisions. An application that does not need those features may ignore or remove them. Similarly, a router that sends the gITF description to such an application may remove this metadata.

### MPEG_accessor_tuples

A new gITF extension, "MPEG_ accessor_tuples", which may extend any glTF accessor, is defined herein. The purpose of "MPEG_accessor tuples" is to store a list of tuples in a glTF file. The representation presented in the previous section is used here, based on two lists. The first one contains the sizes of the tuples, and the second one contains the values of the tuples. This extension may be used for some embodiments to store the list of tuples of vertex indices.

An accessor with the "MPEG_accessor_tuples" extension defines two lists: the sizes of the tuples (encoded in the default accessor data) and the values of the tuples (encoded in the "MPEG_accessor tuples" data). A decoder decodes each list and builds the list of tuples.

This extension is generic and may be used for other purpose than topology encoding. Tuples values may have all the usual accessor data types (e.g., BYTE, UNSIGNED_BYTE, SHORT, UNSIGNED_SHORT, UNSIGNED_INT and FLOAT) and element types (e.g., SCALAR, VEC2, VEC3, VEC4, MAT2, MAT3 and MAT4). For instance, this "MPEG_accessor_tuples" allows the encoding of tuples with 3D vectors with float values, like ([1, 2, 3], [8.2, 0, 10]), ([9, 2, 6.2], [3, 2, 1], [9, 7, 12]), which is a list of two tuples. The first one ([1, 2, 3], [8.2, 0, 10]) has two 3D vectors, and the second one ([9, 2, 6.2], [3, 2, 1], [9, 7, 12]) has three 3D vectors. The encoding uses the sizes of the tuples (2 and 3, respectively, which are encoded in the default accessor data) and the values of the tuples ([1, 2, 3], [8.2, 0, 10], [9, 2, 6.2], [3, 2, 1], [9, 7, 12], which are encoded in the "MPEG_accessor_tuples" data).

### Encoding

Table 1 shows the properties for "MPEG_accessor tuples". These properties are very similar to the standard glTF *Accessor* properties.

**Table 1.**

| **Name** | **Type** | **Description** | **Required** |
|---|---|---|---|
| bufferView | integer | Index of a buffer view with the tuple values. | No |
| byte Offset | integer | The offset relative to the start of the buffer view in bytes. | No, default: 0 |
| componentType | integer | The datatype of tuple values. | Yes |
| count | integer | The number of tuple values. | Yes |
| type | string | Specifies if the tuple values are scalars, vectors, or matrices. | Yes |
| min | number [1-16] | Minimum tuple value. | No |
| max | number [1-16] | Maximum tuple value. | No |

The "bufferView" property is the index of a buffer view in the "bufferViews" glTF root list. The buffer view contains concatenated tuple values. When undefined, all tuple values default to zero.

The "byteOffset" property is the offset relative to the start of the buffer view in bytes. This property is a multiple of the size of the component datatype. This property must not be defined when "bufferView" is undefined.

The "componentType" property is the datatype of the tuple values. Possible values are: BYTE (5120), UNSIGNED_BYTE (5121), SHORT (5122), UNSIGNED_SHORT (5123), UNSIGNED_INT (5125), and FLOAT (5126).

The "count" property is the number of tuple values. The "type" property specifies if the tuple values are scalars, vectors or matrices. Possible values are: "SCALAR", "VEC2", "VEC3", "VEC4", "MAT2", "MAT3", and "MAT4".

The "max" property contains the maximum tuple values. The "min" property contains the minimum tuple values.

When a glTF accessor has a "MPEG_accessor_tuples" extension, then tuples may be built using the accessor's data as the list of tuple sizes and the extension's data as the list of tuple values. As a result, the datatype of the accessor must be unsigned integers.

### Example

Table 2 is a code listing for an example use of the "MPEG_accessor tuples" extension:

| |
|---|
| ```
{
 "accessors": [
  {
    "bufferView": 4,
    "byteOffset": 0,
    "componentType": 5125,
    "count": 6,
    "max": [
      4
    ],
    "min": [
      4
    ],
    "name": "tuples",
    "type": "SCALAR",
    "extensions": {
       "MPEG_accessor_tuples": {
         "bufferView": 3,
         "byteOffset": 0,
         "componentType": 5125,
         "type": "SCALAR",
         "count": 24,
         "max": [
           23
         ],
         "min": [
           0
           ], )]
    }
  }
                                      Table 2.
``` |

The code listing shows only one accessor that uses the "MPEG_accessor tuples".

This accessor has two sections: (1) the "standard" accessor properties ("bufferView", "byteOffset", "componentType", "count", "max", "min", "name", and "type" elements for this example, which is all but "extensions" section) that define a first set of content (sizes of tuples), and (2) the "MPEG_accessor tuples" that defines a second set of content (values of tuples).

The accessor standard properties define a list of six ("count" is 6) 32-bit unsigned integers ("type" is "SCALAR" and "componentType" is 5125) with values between 4 ("min" is 4) and 4 ("max" is 4). The decoding of buffer view 4 ("bufferView" is 4) returns the list [4, 4, 4, 4, 4, 4].

The "MPEG_accessor_tuples" extension defines a list of twenty-four ("count" is 24) 32-bit unsigned int ("type" is "SCALAR" and "componentType" is 5125) with values between 0 ("min" is 0) and 23 ("max" is 23). The decoding of buffer view 3 ("bufferView" is 3) returns the list [7, 20, 14, 1, 22, 18, 6, 10, 19, 23, 16, 12, 21, 9, 3, 15, 11, 8, 2, 5, 4, 0, 13, 17].

As a result, two lists are returned:
- tuple sizes: [4, 4, 4, 4, 4, 4]
- tuple values: [7, 20, 14, 1, 22, 18, 6, 10, 19, 23, 16, 12, 21, 9, 3, 15, 11, 8, 2, 5, 4, 0, 13, 17]

These two lists are combined to build the following list of 6 tuples with 4 values: [(7, 20, 14, 1), (22, 18, 6, 10), (19, 23, 16, 12), (21, 9, 3, 15), (11, 8, 2, 5), (4, 0, 13, 17)]

### Case 1

Table 3 shows the properties for a new gITF extension, "MPEG_primitive topologies", which may extend any glTF primitive. The purpose of this extension is to provide additional topologies to a glTF primitive. Each topology is defined by tuples of vertex indices in the primitive.

**Table 3.**

| **Name** | **Type** | **Description** | **Required** |
|---|---|---|---|
| topologies | Topologies [1-*] | List of *Topology.* | Yes |

The "topologies" list contains *Topology* definitions. Table 4 shows the *Topology* properties for Case 1.

**Table 4.**

| **Name** | **Type** | **Description** | **Required** |
|---|---|---|---|
| description | string | Describe the topology and its purpose (to be used in UI for instance). | No |
| purpose | string | Identifies the main purpose of the topology (for the application). | No |
| edges | integer | Index of an accessor with the size of each face. | Yes |
| indices | integer | Index of an accessor with the list of vertex indices. | Yes |

The "description" property describes the topology and its usage. This property is only illustrative. For example, the "description" property may be used in a user interface to help the user understand the intension of the Topology.

The "purpose" property contains a string that identifies the purpose of the topology. The "purpose" property follows predetermined values, defined by an application or a standard. A string type is used in this application, but an enum type may be used for some embodiments.

The "edges" property is the index of an accessor in the "accessors" gltf root list. This accessor contains a list of integer values with the number of edges in each face in the Topology.

The "indices" property is the index of an accessor in the "accessors" gltf root list. This accessor contains a list of integer values with the vertex indices of each face in the Topology.

### Case 2

Case 2 has the same purpose as Case 1, except that the more general extension "MPEG_accessor tuples" is used to encode the tuples. The new extension "MPEG_primitive_topologies" references an accessor with the "MPEG_accessor_tuples" extension.

Table 5 shows the properties for a new gITF extension, "MPEG_primitive topologies", which may extend any glTF primitive. These properties represent Case 2.

**Table 5.**

| **Name** | **Type** | **Description** | **Required** |
|---|---|---|---|
| topologies | Topologies [1-*] | List of Topology. | Yes |

The "topologies" list contains *Topology* definitions. Table 6 shows the *Topology* properties for Case 2.

**Table 6.**

| **Name** | **Type** | **Description** | **Required** |
|---|---|---|---|
| description | string | Describe the topology and its purpose (to be used in UI for instance). | No |
| purpose | string | Identifies the main purpose of the topology (for the application). | No |
| tuples | integer | Index of an accessor with the size of each face and the list of vertex indices. | Yes |

The "description" property describes the topology and its usage. This property is only illustrative. For example, the "description" property may be used in a user interface to help the user understand the intension of the Topology.

The "purpose" property contains a string that identifies the purpose of the topology. The "purpose" property follows predetermined values, defined by an application or a standard. A string type is used in this application, but an enum type may be used for some embodiments.

The "tuples" property is the index of an accessor in the "accessors" gltf root list. This accessor contains a list of unsigned integer values with the number of edges in each face in the Topology and an MPEG_accessor_tuples with a list of unsigned integer values with the vertex indices of each face in the Topology.

### Case 3

Table 7 shows the properties for a new glTF extension, "MPEG_mesh topologies", which may extend any glTF mesh. The purpose of this extension is to provide additional topologies to a gITF mesh. Each topology is defined by vertices and tuples of vertex indices. Unlike Cases 1 and 2, Case 3 does not use the vertex coordinates defined in the gITF mesh primitives but adds new ones.

**Table 7.**

| **Name** | **Type** | **Description** | **Required** |
|---|---|---|---|
| topologies | Topologies [1-*] | List of *Topology.* | Yes |

The "topologies" list contains *Topology* definitions. Table 8 shows the *Topology* properties for Case 3.

**Table 8.**

| **Name** | **Type** | **Description** | **Required** |
|---|---|---|---|
| description | string | Describe the topology and its purpose (to be used in UI for instance). | No |
| purpose | string | Identifies the main purpose of the topology (for the application). | No |
| positions | integer | Index of an accessor with the vertices. | Yes |
| edges | integer | Index of an accessor with the size of each face. | Yes |
| indices | integer | Index of an accessor with the list of vertex indices. | Yes |

The "description" property describes the topology and its usage. This property is only illustrative. For example, the "description" property may be used in a user interface to help the user understand the intension of the Topology.

The "purpose" property contains a string that identifies the purpose of the topology. The "purpose" property follows predetermined values, defined by an application or a standard. A string type is used in this application, but an enum type may be used for some embodiments.

The "positions" property is the index of an accessor in the "accessors" gltf root list. This accessor contains a list of vertices.

The "edges" property is the index of an accessor in the "accessors" gltf root list. This accessor contains a list of integer values with the number of edges in each face in the Topology.

The "indices" property is the index of an accessor in the "accessors" gltf root list. This accessor must contains a list of integer values with the vertex indices of each face in the Topology.

### Case 4

Case 4 has the same purpose as Case 3, except that the more general extension "MPEG_accessor tuples" is used to encode the tuples. The new extension "MPEG_mesh_topologies" references an accessor with the "MPEG_accessor_tuples" extension.

Table 9 shows the properties for a new glTF extension "MPEG_mesh_topologies", which may extend any glTF mesh. These properties represent Case 4.

**Table 9.**

| **Name** | **Type** | **Description** | **Required** |
|---|---|---|---|
| topologies | Topologies [1-*] | List of Topology. | Yes |

The "topologies" list contains *Topology* definitions. Table 10 shows the *Topology* properties for Case 4.

**Table 10.**

| **Name** | **Type** | **Description** | **Required** |
|---|---|---|---|
| description | string | Describe the topology and its purpose (to be used in UI for instance). | No |
| purpose | string | Identifies the main purpose of the topology (for the application). | No |
| positions | integer | Index of an accessor with the vertices. | Yes |
| tuples | integer | Index of an accessor with the size of each face and the list of vertex indices. | Yes |

The "description" property describes the topology and its usage. This property is only illustrative. For example, the "description" property may be used in a user interface to help the user understand the intension of the Topology.

The "purpose" property contains a string that identifies the purpose of the topology. The "purpose" property follows predetermined values, defined by an application or a standard. A string type is used in this application, but an enum type may be used for some embodiments.

The "positions" property is the index of an accessor in the "accessors" gltf root list. This accessor contains a list of vertices.

The "tuples" property is the index of an accessor in the "accessors" gltf root list. This accessor contains a list of unsigned integer values with the number of edges in each face in the Topology and an MPEG_accessor_tuples with a list of unsigned integer values with the vertex indices of each face in the Topology.

### gITF Schema Example: Cube

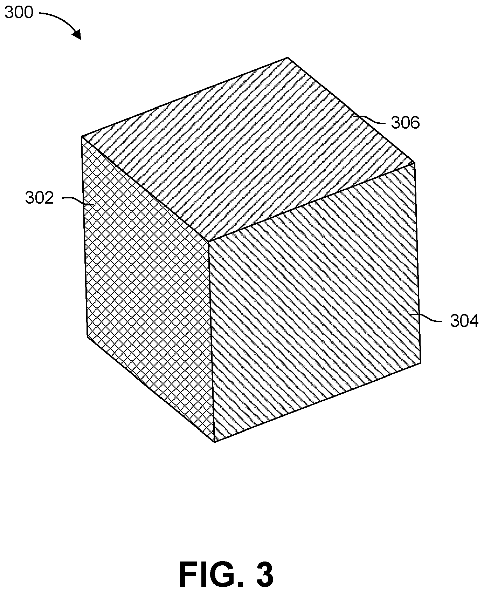

FIG. 3 is a schematic illustration showing an example cube to be encoded according to some embodiments. The following examples illustrate different embodiments. They all encode a textured cube into a gITF. The cube 300 is made of 24 vertices and 12 triangles. The coordinates of the vertices are the following ones:
0: [1. 1. -1.]
1: [1. 1. -1.]
2: 1. 1. -1.]
3: [1. -1. -1.]
4: [1. -1. -1.]
5: [1. -1. -1.]
6: [1. 1. 1.]
7: [1. 1. 1.]
8: [1. 1. 1.]
9: [1. -1. 1.]
10: [1. -1. 1.]
11: [1. -1. 1.]
12: [-1. 1. -1.]
13: [-1. 1. -1.]
14: [-1. 1. -1.]
15: [-1. -1. -1.]
16: [-1. -1. -1.]
17: [-1. -1. -1.]
18: [-1. 1. 1.]
19: [-1. 1. 1.]
20: [-1. 1. 1.]
21: [-1. -1. 1.]
22: [-1. -1. 1.]
23: [-1. -1. 1.]

Each cube face has a unique color and may be made of two triangles or one quad. In each Case, the vertex indices for each triangle/quad are the following ones:
- Face A 302:
   o Triangles: vertex indices (5, 2, 8) and (5, 8, 11)
   o Quad: vertex indices (11, 8, 2, 5)
- Face B 304:
   o Triangles: vertex indices (0, 13, 17) and (17, 0, 4)
   o Quad: vertex indices (4, 0, 13, 17)
- Face C 306:
   ∘ Triangles: vertex indices (1, 14, 20) and (1, 20, 7)
   ∘ Quad: vertex indices (7, 20, 14, 1)
- Face D (hidden):
   ∘ Triangles: vertex indices (10, 6, 18) and (10, 18, 22)
   ∘ Quad: vertex indices (22, 18, 6, 10)
- Face E (hidden):
   ∘ Triangles: vertex indices (23, 19, 12) and (23, 12, 16)
   ∘ Quad: vertex indices (19, 23, 16, 12)
- Face F (hidden):
   ∘ Triangles: vertex indices (15, 3, 9) and (15, 9, 21)
   ∘ Quad: vertex indices (21, 9, 3, 15)

The triangles may be encoded in the glTF using the current standard. The quads may be encoded in the glTF using the proposed embodiments. They are based on two lists:
- Edges list: 4, 4, 4, 4, 4, 4
- Indices list: 7, 20, 14, 1, 22, 18, 6, 10, 19, 23, 16, 12, 21, 9, 3, 15, 11, 8, 2, 5, 4, 0, 13, 17

Each example differs in the topologies metadata they provide (for a primitive or a mesh) and in the encoding approach (using or not MPEG_accessor_tuple).

### Example 1

Table 11 shows an example code listing that illustrates Case 1. Table 11 contains the following sections: accessors, asset, bufferViews, buffers, extensionsUsed, images, materials, meshes, nodes, scene, scenes, and topologys.

| |
|---|
| ```
{
 "accessors": [
 {
    "bufferView": 0,
    "byteOffset": 0,
    "componentType": 5126,
    "count": 24,
    "max": [
      0.875,
      1
    ],
    "min": [
      0.125,
      0
    ],
    "name": "texcoords",
    "type": "VEC2"
  },
  {
    "bufferView": 1,
    "byteOffset": 0,
    "componentType": 5126,
    "count": 24,
    "max": [
       1,
       1,
       1
    ],
    "min": [
       -1,
       -1,
       -1
     ],
     "name": "vertices",
   "type": "VEC3"
 },
 {
    "bufferView": 2,
    "byteOffset": 0,
    "componentType": 5125,
    "count": 36,
    "max": [
      23
    ],
    "min": [
      0
    ],
    "name": "faces",
    "type": "SCALAR"
  },
  {
    "bufferView": 3,
    "byteOffset": 0,
    "componentType": 5125,
    "count": 24,
    "max": [
       23
    ],
    "min": [
       0
    ],
    "name": "indices",
    "type": "SCALAR",
  },
  {
     "bufferView": 4,
     "byteOffset": 0,
     "componentType": 5125,
    "count": 6,
    "max": [
      4
    ],
    "min": [
      4
    ],
    "name": "edges",
    "type": "SCALAR"
  }
  ],
  "asset": {
  "generator": "Interdigital R&D France, Video Lab, MetaVideo,
  Interactive Media, Immersive teleprescence",
  "version": "2.0"
  } ,
  "bufferViews": [
  {
    "buffer": 0,
    "byteLength": 192,
    "byteOffset": 0,
    "name": "texcoords",
    "target": 34962
  },
  {
    "buffer": 1,
    "byteLength": 288,
    "byteOffset": 0,
    "name": "vertices",
    "target": 34962
  },
  {
    "buffer": 2,
    "byteLength": 144,
    "byteOffset": 0,
    "name": "faces",
    "target": 34963
  },
  {
    "buffer": 3,
    "byteLength": 96,
    "byteOffset": 0,
    "name": "indices",
    "target": 34962
  },
  {
    "buffer": 4,
    "byteLength": 24,
    "byteOffset": 0,
    "name": "edges",
    "target": 34962
  }
  ],
  "buffers": [
  {
    "byteLength": 192,
    "name": "texcoords",
    "uri": "data:application/octet-
    stream; base64,AAAgPwAAAD8AACA/AAAAPwAAID8AAAA/AADAPgAAAD8AAMA+AAAAPwAAwD
    4AAAA/AAAgPwAAgD4AACA/AACAPgAAID8AAIA+AADAPgAAgD4AAMA+AACAPgAAwD4AAIA+AA
    AgPwAAQD8AACA/AABAPwAAYD8AAAA/AAAAPgAAAD8AAMA+AABAPwAAwD4AAEA/AAAgPwAAAA
    AAACA/AACAPwAAYD8AAIA+AAAAPgAAgD4AAMA+AAAAAAAAwD4AAIA/"
  },
  {
    "byteLength": 288,
    "name": "vertices",
    "uri": "data:application/octet-
    stream;base64,AACAPwAAgD8AAIC/AACAPwAAgD8AAIC/AACAPwAAgD8AAIC/AACAPwAAgL
    8AAIC/AACAPwAAgL8AAIC/AACAPwAAgL8AAIC/AACAPwAAgD8AAIA/AACAPwAAgD8AAIA/AA
    CAPwAAgD8AAIA/AACAPwAAgL8AAIA/AACAPwAAgL8AAIA/AACAPwAAgL8AAIA/AACAvwAAgD
    8AAIC/AACAvwAAgD8AAIC/AACAvwAAgD8AAIC/AACAvwAAgL8AAIC/AACAvwAAgL8AAIC/AA
    CAvwAAgL8AAIC/AACAvwAAgD8AAIA/AACAvwAAgD8AAIA/AACAvwAAgD8AAIA/AACAvwAAgL
    8AAIA/AACAvwAAgL8AAIA/AACAvwAAgL8AAIA/"
  },
  {
    "byteLength": 144,
    "name": "faces",
    "uri": "data:application/octet-
    stream;base64,AQAAAA4AAAAUAAAAAQAAABQAAAAHAAAACgAAAAYAAAASAAAACgAAABIAAA
    AWAAAAFwAAABMAAAAMAAAAFwAAAAwAAAAQAAAADwAAAAMAAAAJAAAADwAAAAkAAAAVAAAABQ
    AAAAIAAAAIAAAABQAAAAgAAAALAAAAEQAAAAOAAAAAAAAAEQAAAAAAAAAEAAAA"
  },
  {
    "byteLength": 96,
    "name": "indices",
    "uri": "data:application/octet-
    stream; base64,BwAAABQAAAAOAAAAAQAAABYAAAASAAAABgAAAAoAAAATAAAAFwAAABAAAA
    AMAAAAFQAAAAkAAAADAAAADwAAAAsAAAAIAAAAAgAAAAUAAAAEAAAAAAAAAA0AAARAAAA"
  },
  {
    "byteLength": 24,
    "name": "edges",
    "uri": "data:application/octet-
    stream;base64,BAAAAAQAAAAEAAAABAAAAAQAAAAEAAAA"
  }
  ],
  "extensionsUsed": [
  "MPEG_primitive_topologies"
  ],
  "images": [
  {
    "uri": "cube_topology.png"
  }
  ],
  "materials": [
  {
    "name": "uvmap",
    "pbrMetallicRoughness": {
       "baseColorTopology": {
         "index": 0
       },
       "metallicFactor": 0
    }
  }
  ],
  "meshes": [
  {
    "name": "cube",
    "primitives": [
       {
         "attributes": {
           "POSITION": 1,
           "TEXCOORD_0": 0
         },
         "indices": 2,
         "material": 0,
         "extensions": {
           "MPEG_primitive_topologies": {
              "topologies": [
                 {
                   "description": "Quad topology",
                   "purpose": "quads",
                   "edges": 4,
                   "indices": 3
                 }
              ]
            }
         }
       }
    ]
  }
  ],
  "nodes": [
  {
    "mesh": 0
  }
  ],
  "scene": 0,
  "scenes": [
  {
    "nodes": [
      0
    ]
  }
  ],
  "topologys": [
  {
    "source": 0
  }
  ]
  }
                                     Table 11.
``` |

This glTF is first decoded using the standard glTF 2.0, setting to the side for the moment the new extension. Then, the "MPEG_primitive topologies" section found in the first primitive of the first mesh is parsed. The "MPEG_primitive topologies" section contains a "topologies" list with a single Topology definition. The Topology has the following properties: "description", "purpose", "edges", and "indices".

The "description" property has a value of "Quad topology". This description may be used in a user interface to describe the Topology.

The "purpose" property has a string value of "quads". This string indicates to the application a Topology made of quads. For some embodiments, other meanings may be used based on a specific application or a standard.

The "edges" property has as accessor index of 4. The decoding of the accessor provides the edges list.

The "indices" property has as accessor index of 3. The decoding of the accessor provides the indices list.

Using the edges and indices lists, a quad topology may be retrieved for the cube.

### Example 2

Table 12 shows an example code listing that illustrates Case 2. Table 12 contains the following sections: accessors, asset, bufferViews, buffers, extensionsUsed, images, materials, meshes, nodes, scene, scenes, and topologys.

| |
|---|
| ```
{
 "accessors": [
  {
    "bufferView": 0,
    "byteOffset": 0,
    "componentType": 5126,
    "count": 24,
    "max": [
      0.875,
      1
    ],
    "min": [
      0.125,
      0
    ],
    "name": "texcoords",
    "type": "VEC2"
  },
  {
    "bufferView": 1,
    "byteOffset": 0,
    "componentType": 5126,
    "count": 24,
    "max": [
      1,
      1,
      1
    ],
    "min": [
      -1,
      -1,
      -1
    ],
    "name": "vertices",
    "type": "VEC3"
 },
 {
    "bufferView": 2,
    "byteOffset": 0,
    "componentType": 5125,
    "count": 36,
    "max": [
      23
    ],
    "min": [
       0
    ],
    "name": "faces",
    "type": "SCALAR"
  },
  {
    "bufferView": 4,
    "byteOffset": 0,
    "componentType": 5125,
    "count": 6,
    "max": [
       4
     ],
     "min": [
      4
    ],
    "name": "tuples",
    "type": "SCALAR",
    "extensions": {
       "MPEG _accessor _tuples": {
         "bufferView": 3,
         "byteOffset": 0,
         "componentType": 5125,
         "type": "SCALAR",
         "count": 24,
         "max": [
           23
         ],
         "min": [
           0
         ]
       }
    }
  }
  ],
  "asset": {
  "generator": "Interdigital R&D France, Video Lab, MetaVideo,
  Interactive Media, Immersive teleprescence",
  "version": "2.0"
  } ,
  "bufferViews": [
  {
    "buffer": 0,
    "byteLength": 192,
    "byteOffset": 0,
    "name": "texcoords",
    "target": 34962
  },
  {
    "buffer": 1,
    "byteLength": 288,
    "byteOffset": 0,
    "name": "vertices",
    "target": 34962
  },
  {
    "buffer": 2,
    "byteLength": 144,
    "byteOffset": 0,
    "name": "faces",
    "target": 34963
  },
  {
    "buffer": 3,
    "byteLength": 96,
    "byteOffset": 0,
    "name": "indices",
    "target": 34962
  },
  {
    "buffer": 4,
    "byteLength": 24,
    "byteOffset": 0,
    "name": "tuples",
    "target": 34962
  }
  ],
  "buffers": [
  {
    "byteLength": 192,
    "name": "texcoords",
    "uri": "data:application/octet-
    stream;base64,AAAgPwAAAD8AACA/AAAAPwAAID8AAAA/AADAPgAAAD8AAMA+AAAAPwAAwD
    4AAAA/AAAgPwAAgD4AACA/AACAPgAAID8AAIA+AADAPgAAgD4AAMA+AACAPgAAwD4AAIA+AA
    AgPwAAQD8AACA/AABAPwAAYD8AAAA/AAAAPgAAAD8AAMA+AABAPwAAwD4AAEA/AAAgPwAAAA
    AAACA/AACAPwAAYD8AAIA+AAAAPgAAgD4AAMA+AAAAAAAAwD4AAIA/"
  },
  {
    "byteLength": 288,
    "name": "vertices",
    "uri": "data:application/octet-
    stream;base64,AACAPwAAgD8AAIC/AACAPwAAgD8AAIC/AACAPwAAgD8AAIC/AACAPwAAgL
    8AAIC/AACAPwAAgL8AAIC/AACAPwAAgL8AAIC/AACAPwAAgD8AAIA/AACAPwAAgD8AAIA/AA
    CAPwAAgD8AAIA/AACAPwAAgL8AAIA/AACAPwAAgL8AAIA/AACAPwAAgL8AAIA/AACAvwAAgD
    8AAIC/AACAvwAAgD8AAIC/AACAvwAAgD8AAIC/AACAvwAAgL8AAIC/AACAvwAAgL8AAIC/AA
    CAvwAAgL8AAIC/AACAvwAAgD8AAIA/AACAvwAAgD8AAIA/AACAvwAAgD8AAIA/AACAvwAAgL
    8AAIA/AACAvwAAgL8AAIA/AACAvwAAgL8AAIA/"
  },
  {
    "byteLength": 144,
    "name": "faces",
    "uri": "data:application/octet-
    stream;base64,AQAAAA4AAAAUAAAAAQAAABQAAAAHAAAACgAAAAYAAAASAAAACgAAABIAAA
    AWAAAAFwAAABMAAAAMAAAAFwAAAAwAAAAQAAAADwAAAAMAAAAJAAAADwAAAAkAAAAVAAAABQ
    AAAAIAAAAIAAAABQAAAAgAAAALAAAAEQAAAAOAAAAAAAAAEQAAAAAAAAAEAAAA"
  },
  {
    "byteLength": 96,
    "name": "indices",
    "uri": "data:application/octet-
    stream; base64,BwAAABQAAAAOAAAAAQAAABYAAAASAAAABgAAAAoAAAATAAAAFwAAABAAAA
    AMAAAAFQAAAAkAAAADAAAADwAAAAsAAAAIAAAAAgAAAAUAAAAEAAAAAAAAAA0AAARAAAA"
  },
  {
    "byteLength": 24,
    "name": "tuples",
    "uri": "data:application/octet-
    stream;base64,BAAAAAQAAAAEAAAABAAAAAQAAAAEAAAA"
  }
  ],
  "extensionsUsed": [
  "MPEG_accessor_tuple",
  "MPEG_primitive_topologies"
  ],
  "images": [
  {
    "uri": "cube_topology.png"
  }
  ],
  "materials": [
  {
    "name": "uvmap",
    "pbrMetallicRoughness": {
       "baseColorTopology": {
         "index": 0
       },
       "metallicFactor": 0
    }
  }
  ],
  "meshes": [
  {
    "name": "cube",
    "primitives": [
       {
         "attributes": {
           "POSITION": 1,
           "TEXCOORD_0": 0
         },
         "indices": 2,
         "material": 0,
         "extensions": {
           "MPEG_primitive_topologies": {
              "topologies": [
                 {
                   "description": "Quad topology",
                   "purpose": "quads",
                   "tuples": 3
                 }
              ]
            }
         }
       }
    ]
  }
  ],
  "nodes": [
  {
    "mesh": 0
  }
  ],
  "scene": 0,
  "scenes": [
  {
    "nodes": [
      0
    ]
  }
  ],
  "topologys": [
  {
    "source": 0
  }
  ]
  }
                                     Table 12.
``` |

This glTF is first decoded using the standard glTF 2.0, setting to the side for the moment the new extensions. Then, the "MPEG_primitive topologies" section found in the first primitive of the first mesh is parsed. The "MPEG_primitive topologies" section contains a "topologies" list with a single Topology definition. The Topology has the following properties: "description", "purpose", and "tuples".

The "description" property has a value of "Quad topology". This description may be used in a user interface to describe the Topology.

The "purpose" property has a string value of "quads". This string indicates to the application a Topology made of quads. For some embodiments, other meanings may be used based on a specific application or a standard.

The "tuples" property has as accessor index of 3. The decoding of the accessor provides the edges list and the indices list. The edges list is decoded from the accessor's data and the indices list from the "MPEG_accessor_tuples" data.

Using the edges and indices lists, a quad topology may be retrieved for the cube.

### Example 3

Table 13 shows an example code listing that illustrates Case 3. Table 13 contains the following sections: accessors, asset, bufferViews, buffers, extensionsUsed, images, materials, meshes, nodes, scene, scenes, and topologys.

| |
|---|
| ```
{
 "accessors": [
  {
    "bufferView": 0,
    "byteOffset": 0,
    "componentType": 5126,
    "count": 24,
    "max": [
      0.875,
      1
    ],
    "min": [
      0.125,
      0
    ],
    "name": "texcoords",
    "type": "VEC2"
  },
 {
    "bufferView": 1,
    "byteOffset": 0,
    "componentType": 5126,
    "count": 24,
    "max": [
      1,
      1,
      1
    ],
    "min": [
      -1,
      -1,
      -1
    ],
    "name": "vertices",
    "type": "VEC3"
  },
  {
    "bufferView": 2,
    "byteOffset": 0,
    "componentType": 5125,
    "count": 36,
    "max": [
       23
    ],
    "min": [
       0
    ],
    "name": "faces",
    "type": "SCALAR"
  },
  {
     "bufferView": 3,
    "byteOffset": 0,
    "componentType": 5125,
    "count": 24,
    "max": [
      23
    ],
    "min": [
      0
    ],
    "name": "indices",
    "type": "SCALAR"
  },
  {
    "bufferView": 4,
    "byteOffset": 0,
    "componentType": 5125,
    "count": 6,
    "max": [
      4
    ],
    "min": [
      4
    ],
    "name": "edges",
    "type": "SCALAR"
  }
  ],
  "asset": {
  "generator": "Interdigital R&D France, Video Lab, MetaVideo,
  Interactive Media, Immersive teleprescence",
  "version": "2.0"
  },
  "bufferViews": [
  {
    "buffer": 0,
    "byteLength": 192,
    "byteOffset": 0,
    "name": "texcoords",
    "target": 34962
  },
  {
    "buffer": 1,
    "byteLength": 288,
    "byteOffset": 0,
    "name": "vertices",
    "target": 34962
  },
  {
    "buffer": 2,
    "byteLength": 144,
    "byteOffset": 0,
    "name": "faces",
    "target": 34963
  },
  {
    "buffer": 3,
    "byteLength": 96,
    "byteOffset": 0,
    "name": "indices",
    "target": 34962
  },
  {
    "buffer": 4,
    "byteLength": 24,
    "byteOffset": 0,
    "name": "edges",
    "target": 34962
  }
  ],
  "buffers": [
  {
    "byteLength": 192,
    "name": "texcoords",
    "uri": "data:application/octet-
    stream; base64,AAAgPwAAAD8AACA/AAAAPwAAID8AAAA/AADAPgAAAD8AAMA+AAAAPwAAwD
    4AAAA/AAAgPwAAgD4AACA/AACAPgAAID8AAIA+AADAPgAAgD4AAMA+AACAPgAAwD4AAIA+AA
    AgPwAAQD8AACA/AABAPwAAYD8AAAA/AAAAPgAAAD8AAMA+AABAPwAAwD4AAEA/AAAgPwAAAA
    AAACA/AACAPwAAYD8AAIA+AAAAPgAAgD4AAMA+AAAAAAAAwD4AAIA/"
  },
  {
    "byteLength": 288,
    "name": "vertices",
    "uri": "data:application/octet-
    stream;base64,AACAPwAAgD8AAIC/AACAPwAAgD8AAIC/AACAPwAAgD8AAIC/AACAPwAAgL
    8AAIC/AACAPwAAgL8AAIC/AACAPwAAgL8AAIC/AACAPwAAgD8AAIA/AACAPwAAgD8AAIA/AA
    CAPwAAgD8AAIA/AACAPwAAgL8AAIA/AACAPwAAgL8AAIA/AACAPwAAgL8AAIA/AACAvwAAgD
    8AAIC/AACAvwAAgD8AAIC/AACAvwAAgD8AAIC/AACAvwAAgL8AAIC/AACAvwAAgL8AAIC/AA
    CAvwAAgL8AAIC/AACAvwAAgD8AAIA/AACAvwAAgD8AAIA/AACAvwAAgD8AAIA/AACAvwAAgL
    8AAIA/AACAvwAAgL8AAIA/AACAvwAAgL8AAIA/"
  },
  {
    "byteLength": 144,
    "name": "faces",
    "uri": "data:application/octet-
    stream;base64,AQAAAA4AAAAUAAAAAQAAABQAAAAHAAAACgAAAAYAAAASAAAACgAAABIAAA
    AWAAAAFwAAABMAAAAMAAAAFwAAAAwAAAAQAAAADwAAAAMAAAAJAAAADwAAAAkAAAAVAAAABQ
    AAAAIAAAAIAAAABQAAAAgAAAALAAAAEQAAAAOAAAAAAAAAEQAAAAAAAAAEAAAA"
  },
  {
    "byteLength": 96,
    "name": "indices",
    "uri": "data:application/octet-
    stream; base64,BwAAABQAAAAOAAAAAQAAABYAAAASAAAABgAAAAoAAAATAAAAFwAAABAAAA
    AMAAAAFQAAAAkAAAADAAAADwAAAAsAAAAIAAAAAgAAAAUAAAAEAAAAAAAAAA0AAARAAAA"
  },
  {
    "byteLength": 24,
    "name": "edges",
    "uri": "data:application/octet-
    stream;base64,BAAAAAQAAAAEAAAABAAAAAQAAAAEAAAA"
  }
  ],
  "extensionsUsed": [
  "MPEG_mesh_topologies"
  ],
  "images": [
  {
    "uri": "cube_topology.png"
  }
  ],
  "materials": [
  {
    "name": "uvmap",
    "pbrMetallicRoughness": {
       "baseColorTopology": {
         "index": 0
       },
       "metallicFactor": 0
    }
  }
  ],
  "meshes": [
  {
    "name": "cube",
    "primitives": [
       {
         "attributes": {
           "POSITION": 1,
           "TEXCOORD_0": 0
         },
         "indices": 2,
         "material": 0
      }
    ],
    "extensions": {
      "MPEG_mesh_topologies": {
         "topologies": [
           {
              "description": "Bounding box",
              "purpose": "bb:quads",
              "positions": 1,
              "edges": 4,
              "indices": 3
            }
         ]
       }
    }
  }
  ],
  "nodes": [
  {
    "mesh": 0
  }
  ],
  "scene": 0,
  "scenes": [
  {
    "nodes": [
       0
    ]
  }
  ],
  "topologys": [
  {
    "source": 0
  }
  ]
  } Table 13.
``` |

This glTF is first decoded using the standard glTF 2.0, setting to the side for the moment the new extension. Then, the "MPEG_mesh_topologies" section found in the first primitive is parsed. The "MPEG_mesh topologies" section contains a "topologies" list with a single Topology definition. The Topology has the following properties: "description", "purpose", "positions", "edges", and "indices".

The "description" property has a value of "Bounding box". This description may be used in a user interface to describe the Topology.

The "purpose" property has a string value of "bb:quads". This string indicates to the application a Topology made of quads that may be used as a bounding box. For some embodiments, other meanings may be used based on a specific application or a standard.

The "positions" property has as accessor index of 1. The decoding of the accessor provides the vertex list.

The "edges" property has as accessor index of 4. The decoding of the accessor provides the edges list.

The "indices" property has as accessor index of 3. The decoding of the accessor provides the indices list.

Using the vertex, edges and indices lists, a mesh made of quads may be retrieved for the cube and used as a bounding box.

### Example 4

Table 14 shows an example code listing that illustrates Case 4. Table 14 contains the following sections: accessors, asset, bufferViews, buffers, extensionsUsed, images, materials, meshes, nodes, scene, scenes, and topologys.

| |
|---|
| ```
{
 "accessors": [
  {
    "bufferView": 0,
    "byteOffset": 0,
    "componentType": 5126,
   "count": 24,
    "max": [
      0.875,
      1
    ],
    "min": [
      0.125,
      0
    ],
    "name": "texcoords",
    "type": "VEC2"
 },
  {
    "bufferView": 1,
    "byteOffset": 0,
    "componentType": 5126,
    "count": 24,
    "max": [
      1,
      1,
       1
    ],
    "min": [
       -1,
       -1,
       -1
    ],
    "name": "vertices",
    "type": "VEC3"
  },
  {
     "bufferView": 2,
     "byteOffset": 0,
     "componentType": 5125,
    "count": 36,
    "max": [
      23
    ],
    "min": [
      0
    ],
    "name": "faces",
    "type": "SCALAR"
  },
  {
    "bufferView": 4,
    "byteOffset": 0,
    "componentType": 5125,
    "count": 6,
    "max": [
      4
    ],
    "min": [
      4
    ],
    "name": "tuples",
    "type": "SCALAR",
    "extensions": {
       "MPEG _accessor _tuples": {
         "indices": 3,
         "byteOffset": 0,
         "componentType": 5125,
         "type": "SCALAR",
         "count": 24,
         "max": [
           23
         ],
         "min": [
           0 ] } } } ],
           "asset": {
  "generator": "Interdigital R&D France, Video Lab, MetaVideo,
  Interactive Media, Immersive teleprescence",
  "version": "2.0"
  },
  "bufferViews": [
  {
    "buffer": 0,
    "byteLength": 192,
    "byteOffset": 0,
    "name": "texcoords",
    "target": 34962
  },
  {
    "buffer": 1,
    "byteLength": 288,
    "byteOffset": 0,
    "name": "vertices",
    "target": 34962
  },
  {
    "buffer": 2,
    "byteLength": 144,
    "byteOffset": 0,
    "name": "faces",
    "target": 34963
  },
  {
    "buffer": 3,
    "byteLength": 96,
    "byteOffset": 0,
    "name": "indices",
    "target": 34962
  },
  {
    "buffer": 4,
    "byteLength": 24,
    "byteOffset": 0,
    "name": "tuples",
    "target": 34962
  }
  ],
  "buffers": [
  {
    "byteLength": 192,
    "name": "texcoords",
    "uri": "data:application/octet-
    stream; base64,AAAgPwAAAD8AACA/AAAAPwAAID8AAAA/AADAPgAAAD8AAMA+AAAAPwAAwD
    4AAAA/AAAgPwAAgD4AACA/AACAPgAAID8AAIA+AADAPgAAgD4AAMA+AACAPgAAwD4AAIA+AA
    AgPwAAQD8AACA/AABAPwAAYD8AAAA/AAAAPgAAAD8AAMA+AABAPwAAwD4AAEA/AAAgPwAAAA
    AAACA/AACAPwAAYD8AAIA+AAAAPgAAgD4AAMA+AAAAAAAAwD4AAIA/"
  },
  {
    "byteLength": 288,
    "name": "vertices",
    "uri": "data:application/octet-
    stream;base64,AACAPwAAgD8AAIC/AACAPwAAgD8AAIC/AACAPwAAgD8AAIC/AACAPwAAgL
    8AAIC/AACAPwAAgL8AAIC/AACAPwAAgL8AAIC/AACAPwAAgD8AAIA/AACAPwAAgD8AAIA/AA
    CAPwAAgD8AAIA/AACAPwAAgL8AAIA/AACAPwAAgL8AAIA/AACAPwAAgL8AAIA/AACAvwAAgD
    8AAIC/AACAvwAAgD8AAIC/AACAvwAAgD8AAIC/AACAvwAAgL8AAIC/AACAvwAAgL8AAIC/AA
    CAvwAAgL8AAIC/AACAvwAAgD8AAIA/AACAvwAAgD8AAIA/AACAvwAAgD8AAIA/AACAvwAAgL
    8AAIA/AACAvwAAgL8AAIA/AACAvwAAgL8AAIA/"
  },
  {
    "byteLength": 144,
    "name": "faces",
    "uri": "data:application/octet-
    stream;base64,AQAAAA4AAAAUAAAAAQAAABQAAAAHAAAACgAAAAYAAAASAAAACgAAABIAAA
    AWAAAAFwAAABMAAAAMAAAAFwAAAAwAAAAQAAAADwAAAAMAAAAJAAAADwAAAAkAAAAVAAAABQ
    AAAAIAAAAIAAAABQAAAAgAAAALAAAAEQAAAAOAAAAAAAAAEQAAAAAAAAAEAAAA"
  },
  {
    "byteLength": 96,
    "name": "indices",
    "uri": "data:application/octet-
    stream; base64,BwAAABQAAAAOAAAAAQAAABYAAAASAAAABgAAAAoAAAATAAAAFwAAABAAAA
    AMAAAAFQAAAAkAAAADAAAADwAAAAsAAAAIAAAAAgAAAAUAAAAEAAAAAAAAAA0AAARAAAA"
  },
  {
    "byteLength": 24,
    "name": "tuples",
    "uri": "data:application/octet-
    stream;base64,BAAAAAQAAAAEAAAABAAAAAQAAAAEAAAA"
  }
  ],
  "extensionsUsed": [
  "MPEG_accessor_tuple",
  "MPEG_mesh_topologies"
  ],
  "images": [
  {
    "uri": "cube_topology.png"
  }
  ],
  "materials": [
  {
    "name": "uvmap",
    "pbrMetallicRoughness": {
       "baseColorTopology": {
         "index": 0
       },
       "metallicFactor": 0
    }
  }
  ],
  "meshes": [
  {
    "name": "cube",
    "primitives": [
       {
         "attributes": {
           "POSITION": 1,
           "TEXCOORD_0": 0
         },
         "indices": 2,
         "material": 0
       }
    ],
    "extensions": {
       "MPEG_mesh_topologies": {
         "topologies": [
            {
              "description": "Bounding Box",
              "purpose": "bb:quads",
              "positions": 1,
              "tuples": 3
            }
         ]
       }
    }
  }
  ],
  "nodes": [
  {
    "mesh": 0
  }
  ],
  "scene": 0,
  "scenes": [
  {
    "nodes": [
      0
    ]
  }
  ],
  "topologys": [
  {
    "source": 0
  }
  ]
  }
                                     Table 14.
``` |

This glTF is first decoded using the standard glTF 2.0, setting to the side for the moment the new extensions. Then, the "MPEG_mesh topologies" section found in the first primitive is parsed. The "MPEG_mesh topologies" section contains a "topologies" list with a single Topology definition. The Topology has the following properties: "description", "purpose", "positions", and "tuples".

The "description" property has a value of "Bounding box". This description may be used in a user interface to describe the Topology.

The "purpose" property has a string value of "bb:quads". This string indicates to the application a Topology made of quads that may be used as a bounding box. For some embodiments, other meanings may be used based on a specific application or a standard.

The "positions" property has as accessor index of 1. The decoding of the accessor provides the vertex list.

The "tuples" property has as accessor index of 3. The decoding of the accessor provides the edges list and the indices list. The edges list is decoded from the accessor's data and the indices list from the "MPEG_accessor_tuples" data.

Using the vertex, edges and indices lists, a mesh made of quads may be retrieved for the cube and used as a bounding box.

### Accessor with MPEG_controllers Extension

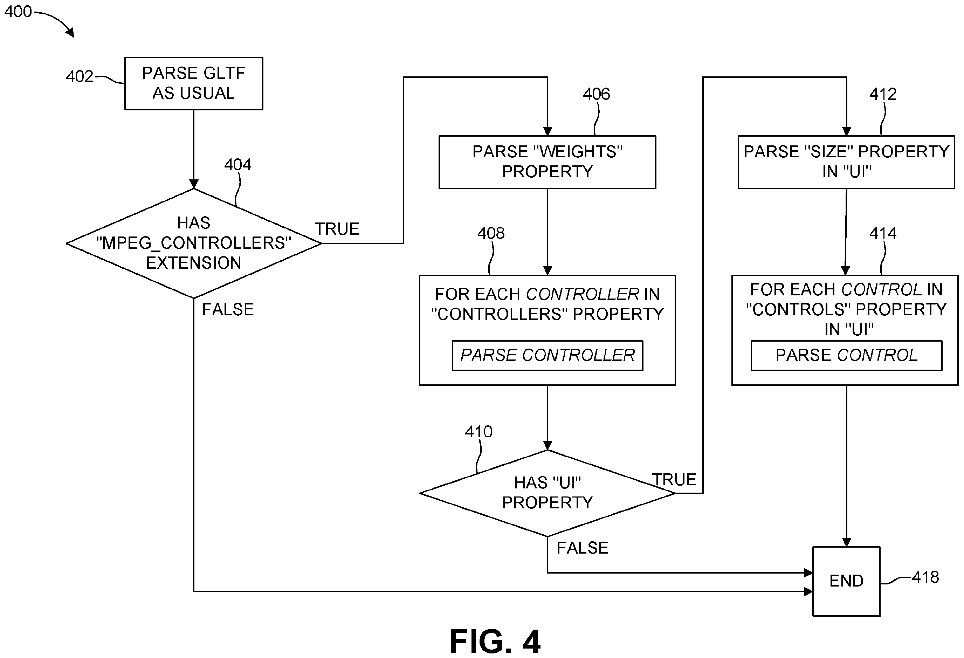

FIG. 4 is a flowchart illustrating an example MPEG_controllers parsing process according to some embodiments. FIG. 4 shows a parsing process 400 for parsing a data structure. In box 402, the glTF accessor is parsed for the "standard" properties, such as the "standard" properties described above with regard to Table 2. A determination 404 is made to determine if the glTF accessor has an "MPEG_controllers" extension. If the determination 404 is false, the parsing process 400 goes to the end box 418 to exit. If the determination 404 is true, the parsing process continues to parse 406 the "weights" property. In box 408, a loop is run for each *controller* in the "controllers" property to parse the controller. A determination 410 is made to determine if there is a "Ul" property. If the determination 404 is false, the parsing process 400 goes to the end box 418 to exit. If the determination 410 is true, the parsing process continues to parse 412 the "size" property within the "Ul" property. In box 414, a loop is run for each *control* in the "controls" property within the "UI" property to parse each *control* section.

### Accessor with MPEG_accessor_tuples Extension

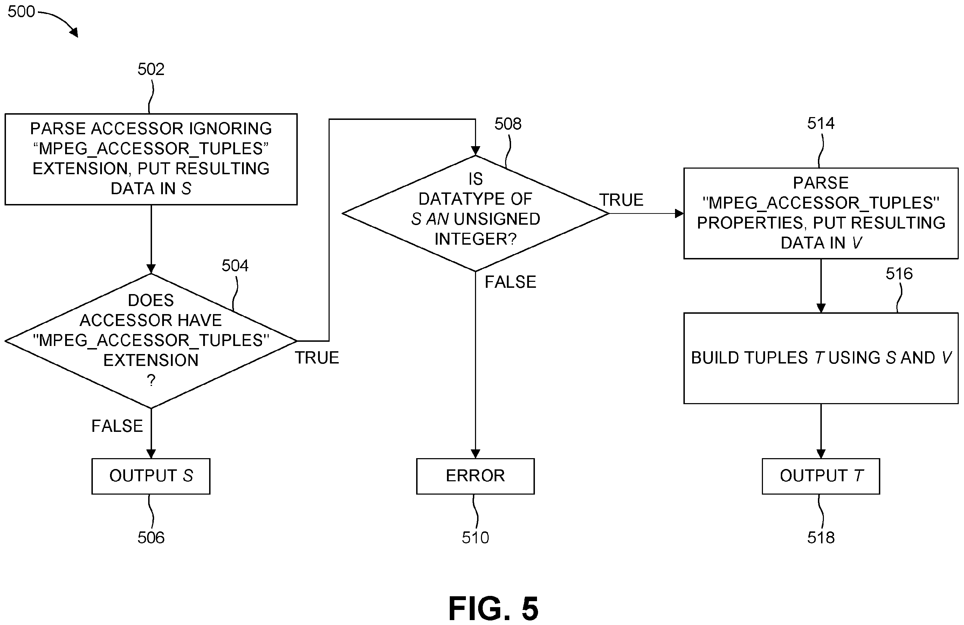

FIG. 5 is a flowchart illustrating an example MPEG_accessor_tuples parsing process according to some embodiments. This example procedure 500 takes place anytime a glTF accessor is parsed. FIG. 5 shows the parsing of a glTF accessor with support to MPEG_accessor tuples.

In box 502, the accessor is first parsed using the current glTF standard and existing extensions, except for the "MPEG_accessor_tuples" extension. The resulting data is put in a data structure denoted *S*.

A determination 504 is made to determine if the accessor has an "MPEG_accessor_tuples" extension. If the determination 504 is false, data structure *S* is outputted 506. This situation is the scenario when there is no "MPEG_accessor_tuples" extension.

If the determination 504 is true, a determination 508 is made to determine if the datatype of *S* is an unsigned integer. For some embodiments, a check is made to determine if the datatype of *S* is an unsigned byte, unsigned short, or unsigned integer. If the determination 508 is false, an error 510 is indicated.

If the determination 508 is true, the "MPEG_accessor tuples" properties are parsed 514, and the resulting data is put in a data structure denoted *V*.

In box 516, tuples are built using *S* as the list of tuple sizes and *V* as the list of concatenated tuple values. *S* and *V* must be consistent, e.g., the size of *V* must be equal to the sum of *S.* The resulting tuples are denoted *T.* In box 518, data structure *T* is outputted.

### MPEG_primitive topologies Parsing

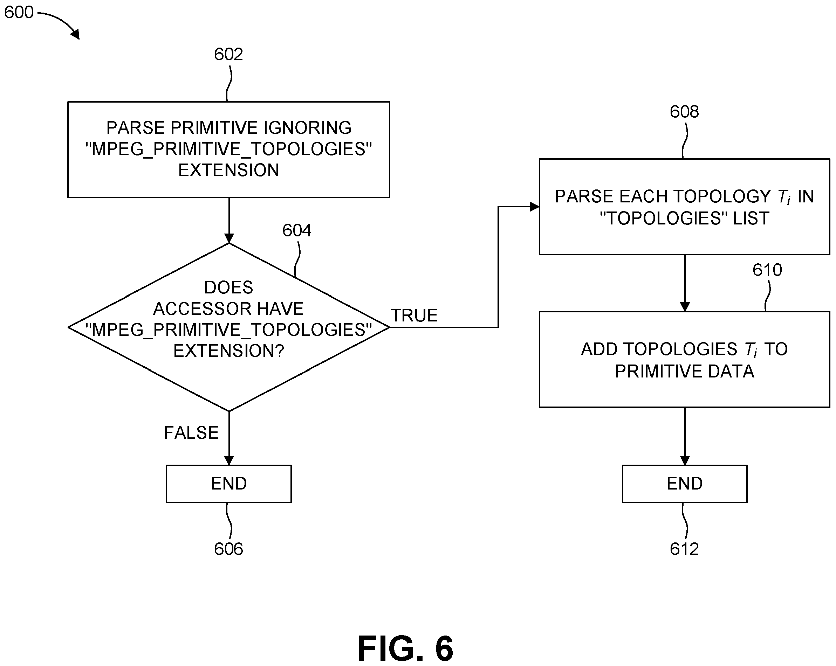

FIG. 6 is a flowchart illustrating an example MPEG_primitive topologies parsing process according to some embodiments. FIG. 6 shows the example parsing process 600 for parsing a glTF primitive supporting MPEG_primitive topologies (Case 1). This procedure 600 takes place anytime a glTF primitive is parsed.

In box 602, the primitive is parsed, except for the "MPEG_primitive topologies" extension. A determination 604 is made to determine if the accessor has an "MPEG_primitive topologies" extension. If the determination 604 is false, the example parsing process 600 goes to the end box 606 to exit.

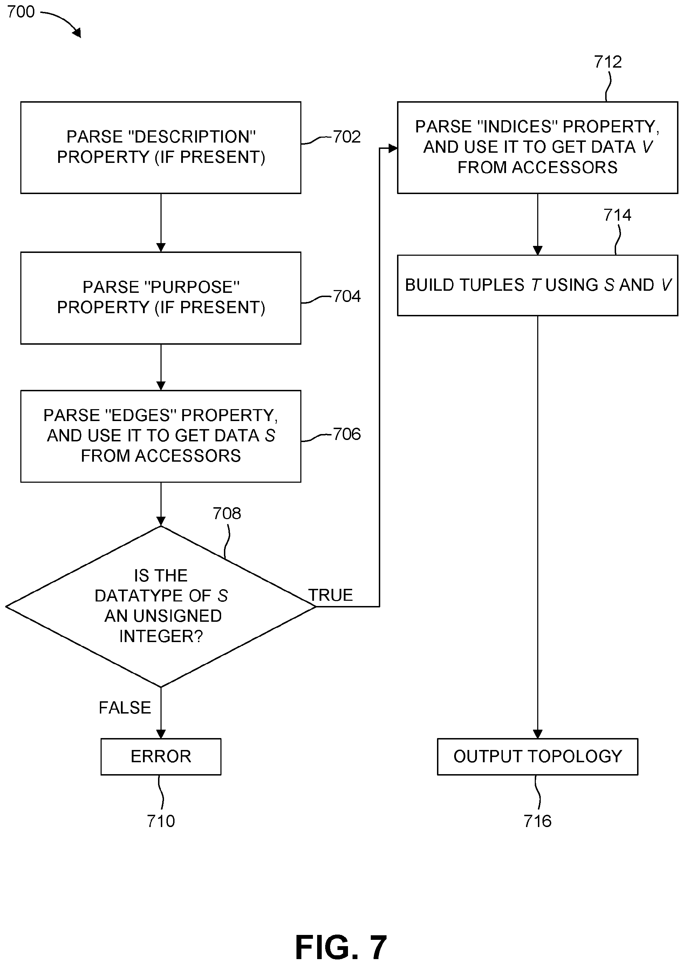

If the determination 604 is true, each topology T in the "topologies" list of the "MPEG_primitive topologies" extension is parsed 608. See FIG. 7 for an example of such parsing. The result is a list *Tᵢ* of topologies. In box 610, the topologies *Tᵢ* are added to the primitive data and then the example parsing process 600 goes to the end box 612 to exit.

FIG. 7 is a flowchart illustrating an example MPEG_primitive topologies parsing process according to some embodiments. FIG. 7 shows an example parsing process 700 to parse an item in the "topologies" list of the "MPEG_primitive topologies" extension (Case 1).

If the "description" property is present, the "description" property is parsed 702 and added to the content of the topology data. If the "purpose" property is present, the "description" property is parsed 704 and added to the content of the topology data. The "edges" property is parsed 706 and used to get data S from the corresponding accessor. The collected data is denoted *S.*

A determination 708 is made to determine if the datatype of *S* is an unsigned integer. For some embodiments, a check is made to determine if the datatype of *S* is an unsigned byte, unsigned short, or unsigned integer. If the determination 708 is false, an error 710 is indicated.

If the determination 708 is true (the datatype of *S* is unsigned integer), the "indices" property is parsed 712 and used to get data from the corresponding accessor. The collected data is denoted *V.* In box 714, the tuples T are built using *S* as the list of tuple sizes and *V* as the list of concatenated tuple values. *S* and *V* must be consistent, e.g. the size of *V* must be equals to the sum of *S.* The resulting tuples are added to the topology data. In box 716, the topology is outputted.

### MPEG_primitive topologies Parsing

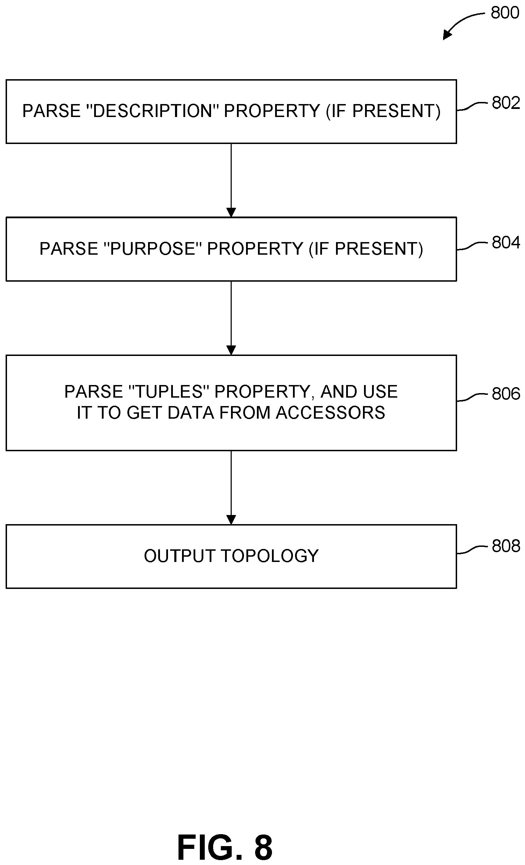

FIG. 8 is a flowchart illustrating an example MPEG_primitive topologies parsing process according to some embodiments. The parsing of a glTF mesh primitive supporting MPEG_primitive_topologies (Case 2) is the same as MPEG_primitive_topologies (Case 1), except that the parsing of "topologies" items is different. FIG. 8 shows the parsing of an item in the "topologies" list of the "MPEG_primitive topologies" extension (Case 2).

If the "description" property is present, the "description" property is parsed 802, and the content is added to the topology data. If the "purpose" property is present, the "purpose" property is parsed 804, and the content is added to the topology data.

In box 806, the "tuples" property is parsed and used to get data from the corresponding accessor. The accessor must provide tuples, for instance using the extension "MPEG_accessor_tuples". The resulting tuples are added to the topology data. In box 808, the topology is outputted.

### MPEG_mesh topologies Parsing

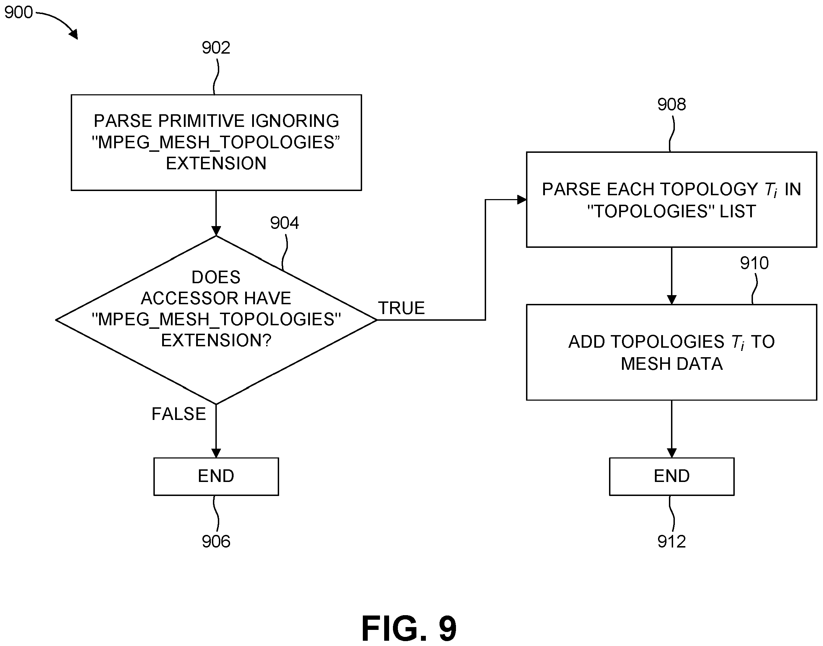

FIG. 9 is a flowchart illustrating an example MPEG_mesh_topologies parsing process according to some embodiments. FIG. 9 shows the example parsing process 900 for parsing a glTF mesh supporting MPEG_mesh_topologies (Case 3). This procedure 900 takes place anytime a glTF mesh is parsed.

In box 902, the mesh is first parsed using the current glTF standard and existing extensions, except for the "MPEG_mesh_topologies" extension. A determination 904 is made to determine if the accessor has an "MPEG_mesh topologies" extension. If the determination 904 is false, the example parsing process 900 goes to the end box 906 to exit.

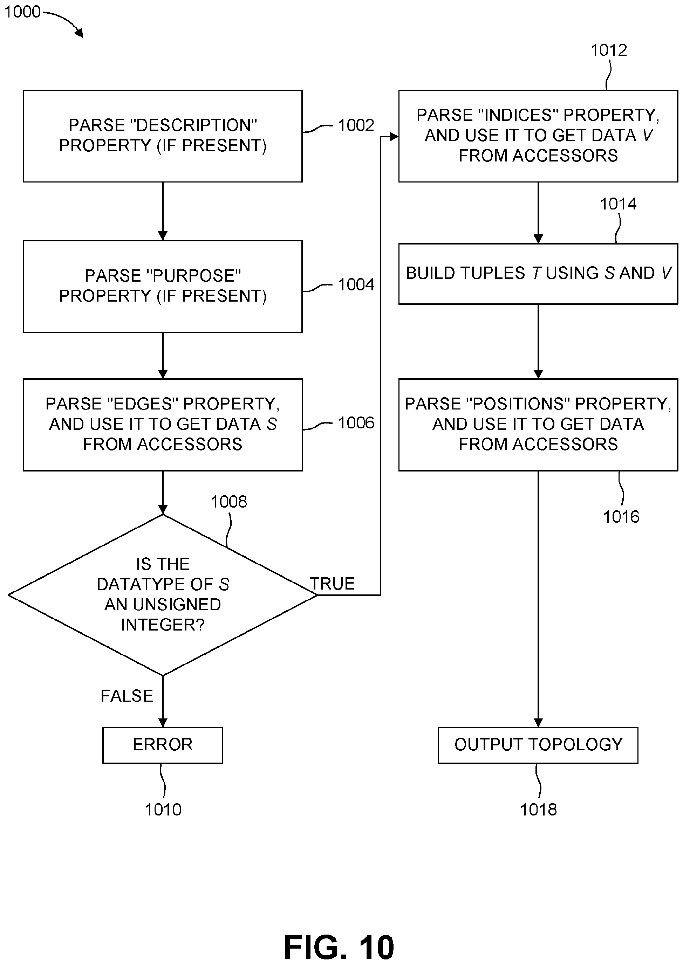

If the determination 904 is true, each topology T in the "topologies" list of the "MPEG_mesh topologies" extension is parsed 908. See FIG. 10 for an example of such parsing. The result is a list *Tᵢ* of topologies. In box 910, the topologies *Tᵢ* are added to the mesh data and then the example parsing process 900 goes to the end box 912 to exit.

FIG. 10 is a flowchart illustrating an example MPEG_mesh topologies parsing process according to some embodiments. FIG. 10 shows an example parsing process 1000 to parse an item in the "topologies" list of the "MPEG_mesh_topologies" extension (Case 3).

If the "description" property is present, the "description" property is parsed 1002 and added to the content of the topology data. If the "purpose" property is present, the "description" property is parsed 1004 and added to the content of the topology data. The "edges" property is parsed 1006 and used to get data *S* from the corresponding accessor. The collected data is denoted *S.*

A determination 1008 is made to determine if the datatype of *S* is an unsigned integer. For some embodiments, a check is made to determine if the datatype of *S* is an unsigned byte, unsigned short, or unsigned integer. If the determination 1008 is false, an error 710 is indicated.

If the determination 1008 is true (the datatype of *S* is unsigned integer), the "indices" property is parsed 1012 and used to get data from the corresponding accessor. The collected data is denoted *V.* In box 1014, the tuples T are built using *S* as the list of tuple sizes and *V* as the list of concatenated tuple values. *S* and *V* must be consistent, e.g. the size of *V* must be equals to the sum of *S.* The resulting tuples are added to the topology data. The "positions" property is parsed 1016 and used to get data from the corresponding accessors. The resulting data is added to the topology data as vertices. In box 1018, the topology is outputted.

### MPEG_mesh topologies Parsing

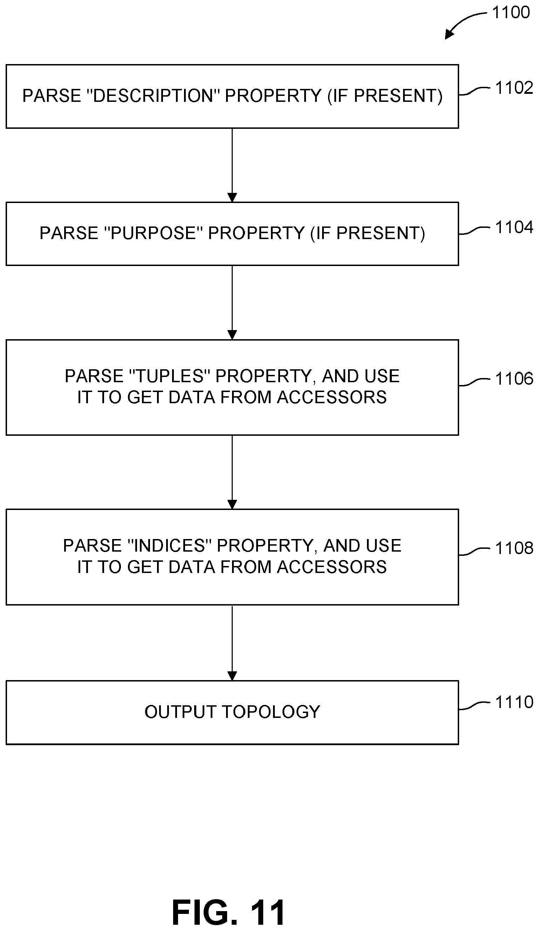

FIG. 11 is a flowchart illustrating an example process for MPEG_mesh_topologies according to some embodiments. The parsing of a glTF mesh primitive supporting MPEG_mesh_topologies (Case 4) is the same as MPEG_mesh topologies (Case 3), except that the parsing of "topologies" items is different. FIG. 11 shows the parsing of an item in the "topologies" list of the "MPEG_mesh_topologies" extension (Case 4).

If the "description" property is present, the "description" property is parsed 1102, and the content is added to the topology data. If the "purpose" property is present, the "purpose" property is parsed 1104, and the content is added to the topology data.

In box 1106, the "tuples" property is parsed and used to get data from the corresponding accessor. The accessor must provide tuples, for instance using the extension "MPEG_accessor_tuples". The resulting tuples are added to the topology data. In box 1108, the "positions" property is parsed and used to get data from the corresponding accessor. The resulting data is added to the topology data as vertices. In box 1110, the topology is outputted.

### Use Cases

When creating 3D assets, a common approach consists of splitting the procedure into several stages. Each stage focuses on a specific task, like working on the mesh modeling, the topologies, the animation, and/or the lights, among other things. These stages are usually handled by different people or teams, or by the same person but at different times. To manage this process, the result of each stage may be stored in a new file. Using the current glTF standard, one may already follow this approach for several tasks. Such an approach may not be taken for other tasks, like 3D sculpting.

Using the current glTF standard, all meshes must be converted into triangle meshes. As a result, if an artist designs an object using meshes made of polygons of different kinds, the artist in the creation workflow will lose this topology. It is common to use non-triangle polygons in asset building. For example, quads are useful for working with edge flow; polygons with many edges are effective for working with circles, like the iris of the eye. Once the mesh is converted to triangles, all dedicated tools may no longer be usable, unless a process is found to retrieve properties, like the edge flows.

Using the extensions discussed herein, the mesh topology is not lost in the gITF. Furthermore, several topologies may be stored in the gITF. As such, the use of building tools based on different polygon types is allowed.

### Bounding Meshes

The extensions discussed herein do not force the additional topologies to have the same number of vertices as the original primitive or mesh. As a result, less complex topologies may be added to a primitive or a mesh, such as a mesh with fewer vertices and planar polygons with many edges. This methodology allows the definition of bounding meshes that enclose the original mesh. These bounding meshes may be used for rendering (or computing if the mesh is visible) or determining collisions. Bounding meshes also may be automatically computed, but in many cases, an artist will create a more efficient bounding mesh than an algorithm, especially in cases where the mesh parts have a functionality (e.g., a part of a mesh may be ignored in collisions because this has no meaning in its use in the application).

### Levels of Details

The additional topologies provided by the extensions described above may be used to propose versions of the mesh with fewer faces.

In a first use of the extensions, additional topologies may be made using only triangles. The rendered object may use a less complex version of the mesh when the object is far from the camera.

In a second use of the extensions, additional topologies may be made using non-triangles. The idea here is not to directly use these topologies for rendering but to use them with mesh decimation algorithms to get better low-resolution versions of the mesh. Indeed, there are many cases where a topology partially (or entirely for some embodiments) made of non-triangles may lead to better decimated meshes. This scenario is usually the case with round and linear shapes (like tubes), in which quads are better for decimation than triangles.

### Tessellation

The effectiveness of tessellation algorithms depends on the mesh topology. In many cases, a topology only made of triangles leads to poor or inefficient results. Using the extensions discussed above, better topologies for tessellation may be provided.

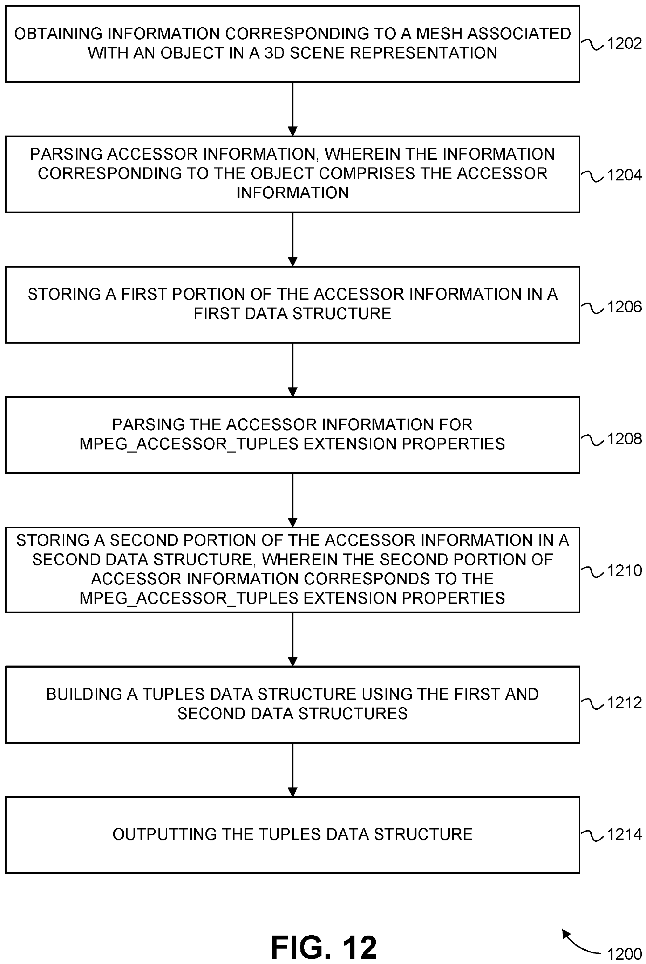

FIG. 12 is a flowchart illustrating an example process for building a tuple data structure according to some embodiments. For some embodiments, an example process 1200 may include obtaining 1202 information corresponding to a mesh associated with an object in a 3D scene representation. For some embodiments, the example process 1200 may further include parsing 1204 accessor information, wherein the information corresponding to the object comprises the accessor information. For some embodiments, the example process 1200 may further include storing 1206 a first portion of the accessor information in a first data structure. For some embodiments, the example process 1200 may further include parsing 1208 the accessor information for MPEG_accessor_tuples extension properties. For some embodiments, the example process 1200 may further include storing 1210 a second portion of the accessor information in a second data structure, wherein the second portion of accessor information corresponds to the MPEG_accessor tuples extension properties. For some embodiments, the example process 1200 may further include building 1212 a tuples data structure using the first and second data structures. For some embodiments, the example process 1200 may further include outputting 1214 the tuples data structure.

While the methods and systems in accordance with some embodiments are generally discussed in context of extended reality (XR), some embodiments may be applied to any XR contexts such as, e.g., virtual reality (VR) / mixed reality (MR) / augmented reality (AR) contexts. Also, although the term "head mounted display (HMD)" is used herein in accordance with some embodiments, some embodiments may be applied to a wearable device (which may or may not be attached to the head) capable of, e.g., XR, VR, AR, and/or MR for some embodiments.

An example method in accordance with some embodiments may include: obtaining information corresponding to a mesh associated with an object in a 3D scene representation; parsing accessor information, wherein the information corresponding to the object comprises the accessor information; storing a first portion of the accessor information in a first data structure; parsing the accessor information for MPEG_accessor tuples extension properties; storing a second portion of the accessor information in a second data structure, wherein the second portion of accessor information corresponds to the MPEG_accessor_tuples extension properties; building a tuples data structure using the first and second data structures; and outputting the tuples data structure.

Some embodiments of the example method further include determining if the accessor information comprises the MPEG_accessor_tuples extension properties.

Some embodiments of the example method further include verifying that a datatype of the first data structure is an unsigned integer.

Some embodiments of the example method further include: parsing primitives information, wherein the information corresponding to the object comprises the primitives information; storing a portion of the primitive information in a primitives data structure; parsing MPEG_primitive_topologies extension properties for topologies data, wherein the information corresponding to the object comprises the MPEG_primitive topologies extension properties; and adding the topologies data to the primitives data structure, wherein the portion of topologies information corresponds to the MPEG_primitive_topologies extension properties.

Some embodiments of the example method further include determining if the accessor information comprises the MPEG_primitive topologies extension properties.

For some embodiments of the example method, parsing MPEG_primitive_topologies extension properties for topologies data comprises: parsing the MPEG_primitive_topologies extension properties of the primitive information; using a first portion of the MPEG_primitive topologies extension properties to obtain the first data structure; using a second portion of the MPEG_primitive_topologies extension properties to obtain the second data structure; building the topologies data using the first and second data structures; and outputting the topologies data.

For some embodiments of the example method, the first portion of the MPEG_primitive_topologies extension properties is an edges property, the second portion of the MPEG_primitive_topologies extension properties is an indices property, and the topologies data comprises tuples data.

Some embodiments of the example method further include: parsing primitives information, wherein the information corresponding to the object comprises the primitives information; storing a portion of the primitive information in a primitives data structure; parsing MPEG_mesh_topologies extension properties for topologies data, wherein the information corresponding to the object comprises the MPEG_mesh topologies extension properties; and adding the topologies data to the primitives data structure, wherein the portion of topologies information corresponds to the MPEG_mesh_topologies extension properties.

Some embodiments of the example method further include determining if the accessor information comprises the MPEG_mesh_topologies extension properties.

For some embodiments of the example method, parsing MPEG_mesh topologies extension properties for topologies data comprises: parsing the MPEG_mesh topologies extension properties; using a first portion of the MPEG_mesh_topologies extension properties to obtain the first data structure; using a second portion of the MPEG_mesh_topologies extension properties to obtain the second data structure; building the topologies data using the first and second data structures; and outputting the topologies data.

For some embodiments of the example method, the first portion of the MPEG_mesh_topologies extension properties is an edges property, the second portion of the MPEG_mesh_topologies extension properties is an indices property, and the topologies data comprises tuples data.

Some embodiments of the example method further include: parsing the MPEG_mesh_topologies extension properties for positions data; and using the positions data to obtain data from the accessor information.

For some embodiments of the example method, the mesh associated with the object comprises one or more polygons with at least four edges.

For some embodiments of the example method, the information corresponding to the mesh complies with a glTF format.

An example apparatus in accordance with some embodiments may include: a processor; and a memory storing instructions operative, when executed by the processor, to cause the apparatus to perform any one of the methods listed above.

This disclosure describes a variety of aspects, including tools, features, embodiments, models, approaches, etc. Many of these aspects are described with specificity and, at least to show the individual characteristics, are often described in a manner that may sound limiting. However, this is for purposes of clarity in description, and does not limit the disclosure or scope of those aspects. Indeed, all of the different aspects can be combined and interchanged to provide further aspects. Moreover, the aspects can be combined and interchanged with aspects described in earlier filings as well.

The aspects described and contemplated in this disclosure can be implemented in many different forms. While some embodiments are illustrated specifically, other embodiments are contemplated, and the discussion of particular embodiments does not limit the breadth of the implementations. At least one of the aspects generally relates to video encoding and decoding, and at least one other aspect generally relates to transmitting a bitstream generated or encoded. These and other aspects can be implemented as a method, an apparatus, a computer readable storage medium having stored thereon instructions for encoding or decoding video data according to any of the methods described, and/or a computer readable storage medium having stored thereon a bitstream generated according to any of the methods described.

In the present disclosure, the terms "reconstructed" and "decoded" may be used interchangeably, the terms "pixel" and "sample" may be used interchangeably, the terms "image," "picture" and "frame" may be used interchangeably. Usually, but not necessarily, the term "reconstructed" is used at the encoder side while "decoded" is used at the decoder side.

Various methods are described herein, and each of the methods comprises one or more steps or actions for achieving the described method. Unless a specific order of steps or actions is required for proper operation of the method, the order and/or use of specific steps and/or actions may be modified or combined. Additionally, terms such as "first", "second", etc. may be used in various embodiments to modify an element, component, step, operation, etc., such as, for example, a "first decoding" and a "second decoding". Use of such terms does not imply an ordering to the modified operations unless specifically required. So, in this example, the first decoding need not be performed before the second decoding, and may occur, for example, before, during, or in an overlapping time period with the second decoding.

Various numeric values may be used in the present disclosure, for example. The specific values are for example purposes and the aspects described are not limited to these specific values.

Embodiments described herein may be carried out by computer software implemented by a processor or other hardware, or by a combination of hardware and software. As a non-limiting example, the embodiments can be implemented by one or more integrated circuits. The processor can be of any type appropriate to the technical environment and can encompass one or more of microprocessors, general purpose computers, special purpose computers, and processors based on a multi-core architecture, as non-limiting examples.

When a figure is presented as a flow diagram, it should be understood that it also provides a block diagram of a corresponding apparatus. Similarly, when a figure is presented as a block diagram, it should be understood that it also provides a flow diagram of a corresponding method/process.

The implementations and aspects described herein can be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus can be implemented in, for example, appropriate hardware, software, and firmware. The methods can be implemented in, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this disclosure are not necessarily all referring to the same embodiment.

Additionally, this disclosure may refer to "determining" various pieces of information. Determining the information can include one or more of, for example, estimating the information, calculating the information, predicting the information, or retrieving the information from memory.

Further, this disclosure may refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this disclosure may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended for as many items as are listed.

Also, as used herein, the word "signal" refers to, among other things, indicating something to a corresponding decoder. For example, in certain embodiments the encoder signals a particular one of a plurality of parameters for region-based filter parameter selection for de-artifact filtering. In this way, in an embodiment the same parameter is used at both the encoder side and the decoder side. Thus, for example, an encoder can transmit (explicit signaling) a particular parameter to the decoder so that the decoder can use the same particular parameter. Conversely, if the decoder already has the particular parameter as well as others, then signaling can be used without transmitting (implicit signaling) to simply allow the decoder to know and select the particular parameter. By avoiding transmission of any actual functions, a bit savings is realized in various embodiments. It is to be appreciated that signaling can be accomplished in a variety of ways. For example, one or more syntax elements, flags, and so forth are used to signal information to a corresponding decoder in various embodiments. While the preceding relates to the verb form of the word "signal", the word "signal" can also be used herein as a noun.

Implementations can produce a variety of signals formatted to carry information that can be, for example, stored or transmitted. The information can include, for example, instructions for performing a method, or data produced by one of the described implementations. For example, a signal can be formatted to carry the bitstream of a described embodiment. Such a signal can be formatted, for example, as an electromagnetic wave (for example, using a radio frequency portion of spectrum) or as a baseband signal. The formatting can include, for example, encoding a data stream and modulating a carrier with the encoded data stream. The information that the signal carries can be, for example, analog or digital information. The signal can be transmitted over a variety of different wired or wireless links, as is known. The signal can be stored on a processor-readable medium.

We describe a number of embodiments. Features of these embodiments can be provided alone or in any combination, across various claim categories and types. Further, embodiments can include one or more of the following features, devices, or aspects, alone or in any combination, across various claim categories and types:
- A bitstream or signal that includes one or more of the described syntax elements, or variations thereof.
- A bitstream or signal that includes syntax conveying information generated according to any of the embodiments described.
- Creating and/or transmitting and/or receiving and/or decoding a bitstream or signal that includes one or more of the described syntax elements, or variations thereof.
- Creating and/or transmitting and/or receiving and/or decoding according to any of the embodiments described.
- A method, process, apparatus, medium storing instructions, medium storing data, or signal according to any of the embodiments described.

Note that various hardware elements of one or more of the described embodiments are referred to as "modules" that carry out (i.e., perform, execute, and the like) various functions that are described herein in connection with the respective modules. As used herein, a module includes hardware (e.g., one or more processors, one or more microprocessors, one or more microcontrollers, one or more microchips, one or more application-specific integrated circuits (ASICs), one or more field programmable gate arrays (FPGAs), one or more memory devices) deemed suitable by those of skill in the relevant art for a given implementation. Each described module may also include instructions executable for carrying out the one or more functions described as being carried out by the respective module, and it is noted that those instructions could take the form of or include hardware (i.e., hardwired) instructions, firmware instructions, software instructions, and/or the like, and may be stored in any suitable non-transitory computer-readable medium or media, such as commonly referred to as RAM, ROM, etc.

Although features and elements are described above in particular combinations, one of ordinary skill in the art will appreciate that each feature or element can be used alone or in any combination with the other features and elements. In addition, the methods described herein may be implemented in a computer program, software, or firmware incorporated in a computer-readable medium for execution by a computer or processor. Examples of computer-readable storage media include, but are not limited to, a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs). A processor in association with software may be used to implement a radio frequency transceiver for use in a WTRU, UE, terminal, base station, RNC, or any host computer.

## Claims

1. A method comprising:
obtaining information corresponding to a mesh associated with an object in a 3D scene representation;
parsing accessor information,
wherein the information corresponding to the object comprises the accessor information;
storing a first portion of the accessor information in a first data structure;
parsing the accessor information for MPEG_accessor_tuples extension properties;
storing a second portion of the accessor information in a second data structure,
wherein the second portion of accessor information corresponds to the MPEG_accessor_tuples extension properties;
building a tuples data structure using the first and second data structures; and
outputting the tuples data structure.

2. The method of claim 1, further comprising determining if the accessor information comprises the MPEG_accessor tuples extension properties.

3. The method of any one of claims 1-2, further comprising verifying that a datatype of the first data structure is an unsigned integer.

4. The method of any one of claims 1-3, further comprising:
parsing primitives information,
wherein the information corresponding to the object comprises the primitives information;
storing a portion of the primitive information in a primitives data structure;
parsing MPEG_primitive_topologies extension properties for topologies data,
wherein the information corresponding to the object comprises the MPEG_primitive topologies extension properties; and
adding the topologies data to the primitives data structure,
wherein the portion of topologies information corresponds to the MPEG_primitive topologies extension properties.

5. The method of claim 4, further comprising determining if the accessor information comprises the MPEG_primitive_topologies extension properties.

6. The method of any one of claims 4-5, wherein parsing MPEG_primitive_topologies extension properties for topologies data comprises:
parsing the MPEG_primitive topologies extension properties of the primitive information;
using a first portion of the MPEG_primitive topologies extension properties to obtain the first data structure;
using a second portion of the MPEG_primitive topologies extension properties to obtain the second data structure;
building the topologies data using the first and second data structures; and
outputting the topologies data.

7. The method of claim 6,
wherein the first portion of the MPEG_primitive topologies extension properties is an edges property,
wherein the second portion of the MPEG_primitive topologies extension properties is an indices property, and
wherein the topologies data comprises tuples data.

8. The method of any one of claims 1-3, further comprising:
parsing primitives information,
wherein the information corresponding to the object comprises the primitives information;
storing a portion of the primitive information in a primitives data structure;
parsing MPEG_mesh topologies extension properties for topologies data,
wherein the information corresponding to the object comprises the MPEG_mesh_topologies extension properties; and
adding the topologies data to the primitives data structure,
wherein the portion of topologies information corresponds to the MPEG_mesh_topologies extension properties.

9. The method of claim 8, further comprising determining if the accessor information comprises the MPEG_mesh topologies extension properties.

10. The method of any one of claims 8-9, wherein parsing MPEG_mesh_topologies extension properties for topologies data comprises:
parsing the MPEG_mesh topologies extension properties;
using a first portion of the MPEG_mesh_topologies extension properties to obtain the first data structure;
using a second portion of the MPEG_mesh_topologies extension properties to obtain the second data structure;
building the topologies data using the first and second data structures; and
outputting the topologies data.

11. The method of claim 10,
wherein the first portion of the MPEG_mesh_topologies extension properties is an edges property,
wherein the second portion of the MPEG_mesh_topologies extension properties is an indices property, and
wherein the topologies data comprises tuples data.

12. The method of any one of claims 10-11, further comprising:
parsing the MPEG_mesh_topologies extension properties for positions data; and
using the positions data to obtain data from the accessor information.

13. The method of any one of claims 1-12, wherein the mesh associated with the object comprises one or more polygons with at least four edges.

14. The method of any one of claims 1-13, wherein the information corresponding to the mesh complies with a glTF format.

15. An apparatus comprising:
a processor; and
a memory storing instructions operative, when executed by the processor, to cause the apparatus to perform the method of any one of claims 1 through 14.
